(19) Europäisches Patentamt
European Patent Office
Office européen des brevets

(11) Numéro de publication: 0 013 647
B1

(12) # FASCICULE DE BREVET EUROPEEN

(45) Date de publication du fascicule du brevet: **08.09.82**

(51) Int. Cl.³: **B 62 M 9/12**

(21) Numéro de dépôt: **80400024.8**

(22) Date de dépôt: **09.01.80**

(54) **Sélecteur notamment pour dérailleur de bicyclette, et son application à un dérailleur.**

(30) Priorité: **12.01.79 FR 7900710**

(43) Date de publication de la demande: **23.07.80 Bulletin 80/15**

(45) Mention de la délivrance du brevet: **08.09.82 Bulletin 82/36**

(84) Etats contractants désignés: **DE GB IT NL**

(56) Documents cités:
**FR-A-2 306 867**
**FR-A-2 319 525**
**FR-A-2 337 657**
**FR-A-2 349 489**
**FR-A-2 395 880**

(73) Titulaire: **ANVAR Agence Nationale de Valorisation de la Recherche, 13, rue Madeleine Michelis, F-92522 Neuilly-sur-Seine (FR)**

(72) Inventeur: **Bonnard, Pierre, 7, rue de la République, D-78650 Beynes (FR)**

(74) Mandataire: **Michardière, Bernard et al, Cabinet Plasseraud 84, rue d'Amsterdam, F-75009 Paris (FR)**

EP 0 013 647 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

Dispositif sélecteur, notamment pour dérailleur de bicyclette, et son application à un dérailleur

L'invention est relative à un dispositif sélecteur pour la commande à distance de la position d'un organe relativement à un support, par un moyen de commande agissant à une extrémité d'un lien souple de traction, notamment un câble, dont l'autre extrémité est reliée par des moyens de liaison audit organe, ces moyens de liaison comprenant une pièce munie de crans dont le nombre est au moins égal au nombre de positions à donner audit organe, ladite pièce étant reliée à l'un des deux éléments formés par l'organe ou le support.

Un tel dispositif sélecteur est utilisé, notamment, pour les dérailleurs de bicyclette.

Dans de tels dispositifs sélecteurs, la présence d'un lien souple de traction, notamment d'un câble, présentant une certaine extensibilité, est une source d'imprécision dans la commande de la position de l'organe. Il est souhaitable, notamment, d'améliorer la précision de cette commande.

La demande de brevet FR-A N° 2306867 a déjà proposé un dérailleur pour bicyclette ayant notamment pour objet de corriger un excès d'extension du câble ou une contraction de la gaine externe par rapport au câble, de façon que la chaîne puisse être exactement déplacée. Selon cette demande de brevet, une pièce munie de crans en forme de came pivotante est prévue pour commander les déplacements transversaux du guide-chaîne. Le pivotement de la came est commandé par la traction ou le relâchement du câble souple dont une extrémité est accrochée à ladite came.

Avec un tel dérailleur, la manœuvre de l'élément de commande monté à l'autre extrémité du câble de commande reste classique, c'est-à-dire que, pour passer les vitesses dans un sens, on déplace le levier de commande, toujours dans le même sens, d'une amplitude d'autant plus élevée que le rapport de vitesse souhaité est plus éloigné; pour passer les vitesses dans l'autre sens, on déplace le levier de commande dans l'autre sens.

On conçoit que lorsque l'on souhaite passer d'une vitesse à la vitesse immédiatement suivante, soit inférieure, soit supérieure, une manœuvre d'amplitude trop forte du levier de commande va provoquer le franchissement non pas d'une seule vitesse, mais de deux vitesses ou plus, contrairement à ce qui était souhaité.

La présente invention a pour but, notamment, de remédier à cet inconvénient, tout en maintenant une commande précise malgré une extension du câble ou une contraction de la gaine externe.

Selon l'invention, un dispositif sélecteur pour la commande à distance de la position d'un organe relativement à un support, du genre défini précédemment, est caractérisé par le fait qu'il comprend des premiers moyens de déplacement propres à coopérer avec ladite pièce en réponse à un mouvement du premier type du moyen de commande, ces premiers moyens de déplacement permettant un déplacement relatif cran par cran entre le support et l'organe, et des seconds moyens de déplacement propres à coopérer avec la pièce en réponse à un mouvement d'un deuxième type de l'élément de commande, ces seconds moyens permettant un déplacement relatif cran par cran entre le support et l'organe dans le deuxième sens, l'ensemble étant agencé de manière que le mouvement du premier type du moyen de commande corresponde à un déplacement de ce moyen de commande depuis une position moyenne (B) jusqu'à une première position extrême (A) (première phase) suivi d'un retour à la position moyenne (B) (seconde phase), tandis que le mouvement du deuxième type correspond à un déplacement de ces moyens de commande depuis la position moyenne (B) jusqu'à une seconde position extrême (C) (première phase) suivi d'un retour à la position moyenne (B) (deuxième phase).

L'invention permet ainsi, à chaque actionnement du moyen de commande, un déplacement d'un cran ou d'un pas seulement de la pièce et donc de l'organe par rapport au support.

Avantageusement, les premiers et seconds moyens de déplacement sont formés respectivement par des premiers et seconds moyens d'encliquetage.

Le dispositif peut comprendre des moyens de verrouillage, notamment à rappel élastique, prévus pour coopérer avec un cran de la pièce pour maintenir cette dernière en position.

Avantageusement, la pièce est reliée audit organe.

Ladite pièce peut être fixée, notamment avec une possibilité de réglage, directement sur l'organe.

Selon un premier groupe de modes de réalisation, des moyens élastiques de rappel sont prévus pour engendrer un effort de rappel entre la pièce et le support.

Les moyens de verrouillage de la pièce font alors avantageusement partie des seconds moyens d'encliquetage.

Ces moyens de verrouillage comprennent un verrou propre à s'engager, sous l'action de moyens élastiques, dans un des crans de la pièce, la forme de ces crans et la forme du verrou étant choisies de manière telle que la réaction engendrée par l'effort de rappel sur la pièce au niveau du contact d'une face du verrou avec une face correspondante du cran n'ait pas tendance à chasser le verrou hors du cran, alors que pour un déplacement de la pièce relativement au support, à l'encontre de cet effort de rappel, la coopération de l'autre face du verrou avec l'autre face du cran provoque la sortie du verrou hors du cran.

Les premiers moyens d'encliquetage sont agencés pour déplacer la pièce à l'encontre de l'effort de rappel élastique.

Les seconds moyens d'encliquetage sont agencés pour dégager le verrou de la pièce et laisser cette pièce se déplacer d'un cran seulement sous l'action de l'effort de rappel élastique.

Les premiers moyens d'encliquetage comprennent un cliquet propre à venir en butée dans le fond d'un cran de la pièce et à entraîner cette pièce lors de la première phase du mouvement du premier type, de manière à provoquer le passage du verrou dans le cran suivant.

Ce cliquet est porté par l'extrémité d'un bras articulé sur un axe porté par le support, l'extrémité du lien souple étant accrochée à ce bras et un effort de rappel élastique étant exercé sur ledit bras de manière à maintenir sous tension le lien souple, l'ensemble étant tel que le mouvement du premier type correspond à un déplacement du moyen de commande qui commence par une traction sur le lien souple (première phase), puis par un relâchement du lien souple (deuxième phase) pour le retour du moyen de commande à sa position moyenne.

Les seconds moyens d'encliquetage sont agencés de manière que, lors de la première phase du mouvement du deuxième type, le verrou soit dégagé de la face du cran contre laquelle il était en butée, de telle sorte que la pièce se déplace sous l'action de l'effort de rappel élastique, ces seconds moyens d'encliquetage comprenant des moyens de butée propres à retenir la pièce lorsqu'elle a parcouru sensiblement un demi-cran, ces seconds moyens d'encliquetage assurant, lors de la deuxième phase du mouvement du deuxième type, le retour du verrou dans le cran suivant, les moyens de butée libérant la pièce.

Selon une première solution, le verrou peut être dégagé d'un cran de la pièce par un déplacement dans le plan moyen du verrou et de la pièce, et suivant une direction sensiblement perpendiculaire à la direction selon laquelle les crans se succèdent.

Le verrou peut alors être porté par un doigt à déplacement rectiligne — ou par un doigt articulé — à une extrémité, sur un axe.

Les seconds moyens d'encliquetage comprennent un bras, notamment coudé, articulé sur un pivot porté par le verrou, ce bras comportant une tête, notamment arrondie, munie d'un bec propre à pénétrer dans un cran voisin de celui coopérant avec le verrou, des moyens d'interaction étant prévus entre ce bras et les premiers moyens d'encliquetage, de telle sorte que les mouvements des premiers moyens d'encliquetage provoquent une rotation de ce bras, l'ensemble étant tel que, lors de la première phase du mouvement du deuxième type, la rotation dudit bras autour du pivot porté par le verrou et la coopération de la tête avec la surface d'un cran provoquent la sortie du verrou, le bec de la tête constituant les moyens de butée propres à retenir la pièce en fin de première phase de ce mouvement du deuxième type, tandis que, lors de la seconde phase de ce mouvement du deuxième type, le bras reprend la position qui permet le retour du verrou dans le cran suivant.

Les moyens d'interaction entre le bras et les premiers moyens d'encliquetage peuvent être formés par une biellette de liaison, notamment lorsque la pièce munie de crans a une ligne moyenne rectiligne de manière à former une crémaillère.

Lorsque le susdit organe est relié au support par au moins une branche articulée sur un axe porté par le support, des moyens de rappel élastiques étant prévus entre ladite branche et le support, on agence avantageusement la pièce, les premiers et seconds moyens d'encliquetage et les moyens de verrouillage sous la forme d'un ensemble propre à être monté sur un prolongement dudit axe d'articulation de la branche.

La pièce est alors constituée par un secteur circulaire muni de crans, centré sur ledit axe et comportant une butée unilatérale coopérant avec la susdite branche, les premiers moyens d'encliquetage comprenant un levier articulé sur ledit axe et relié au lien souple, ce levier étant muni du susdit cliquet, les seconds moyens d'encliquetage comprenant également un levier articulé sur ledit axe et prenant appui sur le support de manière à être bloqué par rapport à ce support, ce levier portant, à une extrémité, un doigt articulé sollicité élastiquement, muni à une extrémité du susdit verrou, le susdit bras des seconds moyens d'encliquetage étant articulé sur un pivot porté par ce verrou; les moyens d'interaction entre les premiers moyens d'encliquetage et le bras des seconds moyens d'encliquetage sont alors constitués par des moyens de butée unilatérale, prévus sur le levier des premiers moyens d'encliquetage et propres à agir sur le bras des seconds moyens d'encliquetage de manière à le faire tourner. Ces moyens d'interaction peuvent être constitués par un ergot porté par ledit levier.

Selon une deuxième solution, le verrou est articulé sur une tige parallèle à la direction de succession des crans de la pièce, de telle sorte que le verrou puisse être dégagé d'un cran par rotation autour de ladite tige, dans un plan perpendiculaire à la direction de succession des crans de la pièce, cette rotation étant commandée par des moyens de poussée agissant sur le verrou, lors de la première phase du mouvement du deuxième type, les moyens de butée propres à retenir la pièce en fin de la première phase de ce mouvement du deuxième type étant formés par une seconde pièce munie de crans et décalée sensiblement d'un demi-cran par rapport à la première pièce, le verrou revenant dans un cran de la première pièce lors de la deuxième phase du mouvement du deuxième type.

Selon un autre mode de réalisation, la susdite pièce peut n'être soumise à aucun effort de rappel élastique vis-à-vis du support.

Les moyens de verrouillage sont alors distincts des seconds moyens d'encliquetage, et ces moyens de verrouillage ainsi que les crans de la pièce sont agencés de manière à permettre le déplacement de la pièce, dans un sens ou dans le sens opposé, en réponse à une action suffisamment forte exercée sur ladite pièce.

Les moyens de verrouillage sont formés, de préférence, par un dispositif du genre billage comprenant une bille ou un galet sollicité par des moyens élastiques pour s'engager dans un cran de la pièce et maintenir cette dernière.

Le dispositif de l'invention convient, notamment, pour la commande du passage d'une chaîne d'entraînement, d'un pignon à un pignon de diamètre différent, les premiers moyens d'encliquetage commandant le déplacement de la pièce munie de crans dans le sens qui correspond au passage de la chaîne d'un pignon inférieur au pignon immédiatement supérieur.

Les premiers moyens d'encliquetage sont alors agencés de manière qu'à la fin de la première phase du mouvement du premier type la chaîne occupe une position au-delà de la position normale, correspondant notamment à environ un demi-cran de la pièce, le retour de la chaîne à une position correspondant à celle du pignon étant obtenu lors de la deuxième phase du mouvement du premier type.

Une application particulièrement intéressante d'un dispositif sélecteur tel que défini précédemment concerne les dérailleurs de bicyclette, aussi bien dérailleur arrière (commande du changement des pignons de la roue arrière) que dérailleur avant (commande d'un changement de plateau).

Le moyen de commande est alors constitué par le levier habituel de commande du dérailleur et le susdit organe est formé par un guide de la chaîne de la bicyclette.

Dans le cas où il s'agit d'une commande de dérailleur pour les pignons arrière de la bicyclette, on agence ce dispositif sélecteur de telle sorte que le passage d'un pignon de diamètre inférieur à un pignon de diamètre supérieur soit commandé par les premiers moyens d'encliquetage, et ce de manière telle que, à la fin de la première phase du mouvement du premier type, l'organe, c'est-à-dire le guide de la chaîne, occupe une position au-delà de la position normale; le retour du guide de la chaîne à une position correspondant à celle du pignon est obtenu lors de la deuxième phase du mouvement du premier type.

Ce dépassement fugitif de la position souhaitée facilite le passage de la chaîne sur le pignon supérieur.

Des moyens de butée sont prévus au niveau des moyens d'encliquetage pour assurer une limite précise au dépassement momentané de la position du guide de la chaîne en fin de la première phase du mouvement du premier type.

Le dispositif sélecteur comporte avantageusement, au niveau des moyens de commande, des moyens d'affichage de la position du susdit organe.

Selon une solution avantageuse, dans le cas d'un dérailleur de bicyclette, le guide-chaîne est monté coulissant sur un axe transversal, et les moyens de déplacement de la pièce sont agencés pour s'écarter de cette pièce et la libérer complètement lorsqu'un changement de pignon est terminé.

De préférence, l'axe transversal est l'arbre d'articulation du guide-chaîne, il peut être coaxial au galet supérieur du guide-chaîne.

Selon une première possibilité, le montage coulissant du guide-chaîne avec frottement de coulissement réduit est assuré en prévoyant un manchon solidaire du galet rotatif, l'ensemble du manchon et du galet pouvant tourner et coulisser par rapport à l'arbre transversal, le guide-chaîne se déplaçant avec le galet dans son mouvement de translation, les moyens de rappel élastiques, exerçant le couple de rappel qui maintient la tension de la chaîne, étant agencés de manière à ne produire aucune réaction transversale sensible parasite au coulissement; la combinaison de la rotation du galet et du manchon et de l'absence d'une réaction transversale sensible permettent un coulissement de l'ensemble du guide-chaîne avec frottement réduit.

Les moyens de rappel élastiques à réaction transversale nulle ou sensiblement nulle peuvent être constitués par deux ressorts à couple de rappel de même sens, mais à effet transversal ou radial opposé.

Selon une deuxième possibilité, le guide-chaîne est monté coulissant sur l'arbre transversal par l'intermédiaire d'une douille à billes, pour mouvements axiaux, qui permet un coulissement à frottement réduit.

Les moyens de déplacement de la pièce munie de crans comprennent, de préférence, des premiers et des seconds moyens d'encliquetage propres à intervenir, respectivement, en réponse aux mouvements du premier et du second types du levier de commande, ces premiers et seconds moyens d'encliquetage comprenant un bras articulé commun, muni de deux cliquets destinés à travailler en sens contraires et reliés par des moyens d'interaction, notamment formés par un ressort, l'extrémité du câble de commande étant accrochée au susdit bras.

La pièce munie de crans s'étend parallèlement à l'arbre transversal d'articulation du guide-chaîne, au voisinage des cliquets. Les crans de cette pièce peuvent être constitués par des trous dans lesquels sont propres à venir s'engager, lors d'un déplacement, les extrémités des cliquets formées par des ergots.

Le dispositif comporte, de préférence, pour chaque cliquet, une came munie d'une rampe coopérant avec un pion solidaire du cliquet et déterminant la position angulaire de ce cliquet sous l'effet d'un rappel élastique, l'ensemble étant tel que lors de la rotation du bras portant le cliquet, dans un sens déterminé, la rampe de la came assure le guidage du cliquet jusqu'à ce que son ergot entre dans le cran correspondant de la pièce pour entraîner cette dernière.

Deux cames sont généralement prévues respectivement pour les deux cliquets, ces deux cames étant situées dans des plans différents, respectivement au-dessus et au-dessous du bras portant les cliquets.

Des moyens de verrouillage de la pièce et du guide-chaîne dans une position correspondant à celle d'un pignon peuvent être prévus.

L'invention consiste, mises à part les dispositions exposées ci-dessus, en certaines autres dispositions dont il sera plus explicitement question ci-après à propos de modes de réalisation particuliers, décrits avec référence aux dessins ci-annexés, mais qui ne sont nullement limitatifs:

— la fig. 1 de ces dessins est une vue simplifiée d'un dérailleur de bicyclette équipé d'un dispositif sélecteur conforme à l'invention,

— la fig. 2 est une vue du dispositif sélecteur suivant la flèche II (fig. 1),

— les fig. 3, 4 et 5 montrent, semblablement à la fig. 2, les éléments du dispositif sélecteur dans des positions correspondant à des phases de fonctionnement,

— la fig. 6 est une vue en élévation d'un dérailleur de bicyclette spécialement agencé pour recevoir un dispositif sélecteur selon l'invention,

— la fig. 7 est une coupe, rabattue, suivant VII-VII (fig. 6),

— la fig. 8 est une vue partielle, en extérieur et en éclaté, du boîtier du dérailleur de la fig. 6, le fond du boîtier étant représenté démonté,

— la fig. 9 illustre une autre variante de réalisation du dispositif sélecteur, adaptable sur un dérailleur de bicyclette à parallélogramme,

— la fig. 10 illustre le montage du dispositif sélecteur de la fig. 9 sur le dérailleur,

— les fig. 11 et 12 illustrent, respectivement, deux phases de fonctionnement du dispositif de la fig. 9,

— la fig. 13 illustre une autre variante du dispositif sélecteur de l'invention,

— la fig. 14 est une vue partielle de gauche par rapport à la fig. 13,

— la fig. 15 représente le dispositif de la fig. 13 dans une phase de fonctionnement,

— la fig. 16 est une vue de gauche par rapport à la fig. 15,

— la fig. 17 représente le dispositif de la fig. 13 dans une autre phase de fonctionnement,

— la fig. 18 est une vue de gauche par rapport à la fig. 17,

— la fig. 19 est une vue partielle, en perspective, de la pièce munie de crans à laquelle est accolée une autre pièce servant de moyens de butée en fin de la première phase du mouvement du deuxième type,

— la fig. 20 représente un mode de réalisation pour un dispositif sélecteur dans lequel la pièce munie de crans n'est pas soumise à un effort de rappel,

— les fig. 21 à 23 représentent diverses phases de fonctionnement du dispositif de la fig. 20,

— la fig. 24 représente le moyen de commande formé par un levier de commande de dérailleur de bicyclette, équipé de moyens d'affichage de la position de l'organe,

— la fig. 25 est une vue de gauche par rapport à la fig. 24,

— la fig. 26 est une vue de la base du levier de la fig. 24, munie de cliquets,

— la fig. 27 est une vue partielle suivant XXVII-XXVII (fig. 26),

— la fig. 28 est une vue du disque, muni de fenêtres, permettant une action sélective des cliquets du levier,

— la fig. 29 est une coupe du tambour d'affichage, comportant des dentures propres à coopérer avec les cliquets,

— la fig. 30 est une vue de gauche du tambour de la fig. 29 faisant apparaître les deux dentures propres à coopérer avec les deux cliquets,

— la fig. 31 est une coupe partielle suivant la ligne XXXI de la piste extérieure de la fig. 30,

— la fig. 32 est une coupe partielle suivant la ligne XXXII de la piste intérieure de la fig. 30,

— la fig. 33 est une vue d'ensemble, en élévation, d'un autre mode de réalisation,

— la fig. 34 est une vue simplifiée suivant la flèche XXXIV (fig. 33),

— la fig. 35 est une vue semblable à celle de la fig. 34, mais pour une position de fonctionnement différente,

— la fig. 36 montre les moyens de rappel élastiques en rotation du guide-chaîne,

— les fig. 37 et 38 montrent les deux ressorts composant les moyens élastiques de la fig. 36,

— la fig. 39 illustre une variante de montage sur l'arbre transversal,

— la fig. 40 illustre le montage du guide-chaîne sur l'arbre transversal avec une douille à billes,

— la fig. 41 est une vue en élévation avec partie arrachée d'un dispositif selon l'invention comprenant des moyens de verrouillage du guide-chaîne,

— la fig. 42 est une vue partielle suivant la flèche XLII, (fig. 41), et enfin

— la fig. 43 est une vue partielle suivant la flèche XLIII (fig. 41).

Dans un but de simplification, la description concernera essentiellement l'application du dispositif sélecteur de l'invention à un dérailleur de bicyclette et plus précisément aux dérailleurs pour les pignons arrière. Il est clair, cependant, que le dispositif sélecteur de l'invention peut convenir pour le dérailleur avant d'une bicyclette équipée de plusieurs plateaux, le dérailleur avant commandant le passage de la chaîne d'un plateau à l'autre. Il est clair également que ce dispositif sélecteur peut convenir pour commander, d'une manière générale, la position d'un organe relativement à un support.

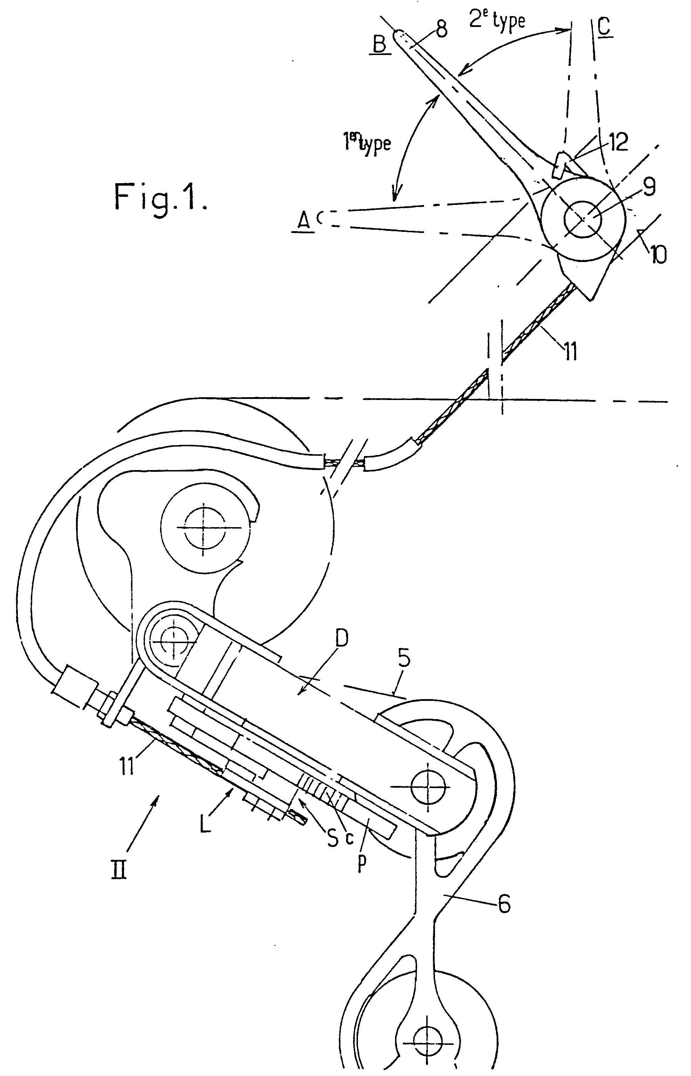

En se reportant aux fig. 1 à 5, on peut voir un premier mode de réalisation du dispositif sélecteur S de l'invention.

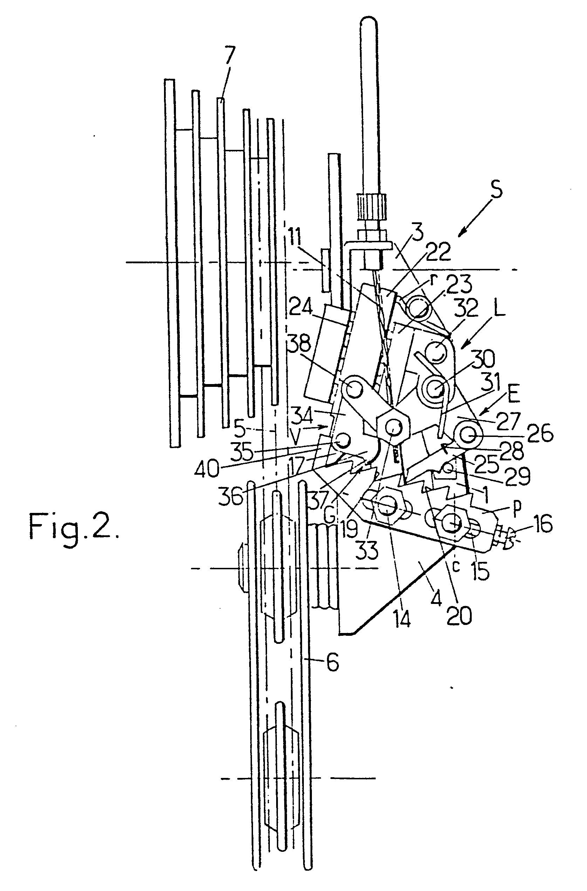

Comme visible sur la fig. 1, ce dispositif sélecteur S a été monté sous un dérailleur classique D pour pignons arrière de bicyclette. Il s'agit, plus particulièrement, d'un dérailleur à parallélogramme déformable comprenant deux branches parallèles 1, 2, articulées sur un support 3 et supportant un organe 4 qui peut se déplacer par rapport au support 3 grâce à la déformation du parallélogramme. L'organe 4 porte le guide 6 de la chaîne 5 de bicyclette; ce guide est équipé d'un dispositif classique à galets pour tenir la chaîne 5 sous tension malgré la variation du diamètre des pignons arrière tels que 7, lors d'un changement de pignon. Ces pignons arrière 7 ont été représentés au nombre de cinq sur les fig. 2 à 5. Le déplacement de l'organe 4 suivant une direction parallèle à l'axe des pignons permet de faire passer la chaîne 5 d'un pignon à l'autre.

La commande de la position de l'organe 4 est effectuée, à distance, par un moyen de commande formé par un levier 8 (fig. 1) classique, articulé sur un axe 9 monté sur le cadre 10 de la bicyclette. Le levier 8 agit sur l'extrémité d'un câble de traction 11. L'autre extrémité de ce câble 11 est reliée par des moyens de liaison L à l'organe 4.

Un ressort de torsion 12 est prévu pour maintenir le levier 8 dans la position moyenne B représentée en trait plein sur la fig. 1.

A partir de cette position, le levier 8 peut décrire un mouvement d'un premier type dont il sera question plus loin. Ce mouvement du premier type comprend une première phase dans laquelle, selon la représentation de la fig. 1, le levier 8 tourne autour de son axe 9 dans le sens contraire des aiguilles d'une montre jusqu'à la position A en trait mixte, représentée sur cette fig. 1, ce qui a pour effet d'exercer une traction sur le câble 11; dans une deuxième phase de ce mouvement du premier type, le levier 8 revient, en tournant dans le sens des aiguilles d'une montre, de sa position extrême A à la position moyenne B.

Dans un mouvement du deuxième type, le levier 8 se déplace, tout d'abord, dans le sens des aiguilles d'une montre depuis sa position moyenne B jusqu'à la position extrême C représentée en trait mixte sur la fig. 1, ce qui correspond à un relâchement du câble 11; le levier 8 revient ensuite dans le sens contraire des aiguilles d'une montre à sa position moyenne.

Les moyens de liaison L comprennent une pièce p munie de crans c dont le nombre est au moins égal au nombre de positions à donner à l'organe 4.

Dans l'exemple décrit, cinq positions sont à donner à l'organe 4, ces positions correspondant aux cinq pignons 7. La pièce p comporte six crans, c'est-à-dire un cran de plus que le nombre de positions à donner à l'organe 4. Ce cran supplémentaire permet d'éviter un chevauchement des différents éléments constitutifs du dispositif sélecteur.

La pièce p est fixée directement sur l'organe 4, avec possibilité de réglage, comme visible sur la fig. 2. La fixation est obtenue à l'aide de goujons 14, solidaires de l'organe 4, qui traversent des boutonnières 15 prévues dans la pièce p; cette dernière est bloquée sur l'organe 4 par des écrous vissés sur les goujons 14. Une vis 16 engagée dans la pièce p et prenant appui sur l'organe 4 permet d'effectuer un réglage précis de la position relative de la pièce p.

Comme visible sur les fig. 2 à 5, la pièce p a une ligne moyenne rectiligne et constitue en quelque sorte une crémaillère.

Des moyens élastiques de rappel (non visibles sur les dessins) sont prévus pour engendrer un effort de rappel entre la pièce p et le support 3.

En fait, dans le cas présent d'un dérailleur arrière de bicyclette, ces moyens élastiques de rappel sont constitués par le ressort de torsion classique qui assure le rappel de l'organe 4 par rapport au support 3.

Les moyens de liaison L comprennent, également:

— des premiers moyens d'encliquetage E propres à coopérer avec la pièce p en réponse à un mouvement du premier type du levier de commande 8,

— des seconds moyens d'encliquetage G propres à coopérer avec la pièce p en réponse à un mouvement du deuxième type de l'élément de commande 8, et

— des moyens de verrouillage V à rappel élastique r, prévus pour coopérer avec un cran de la pièce p afin de maintenir cette dernière en position.

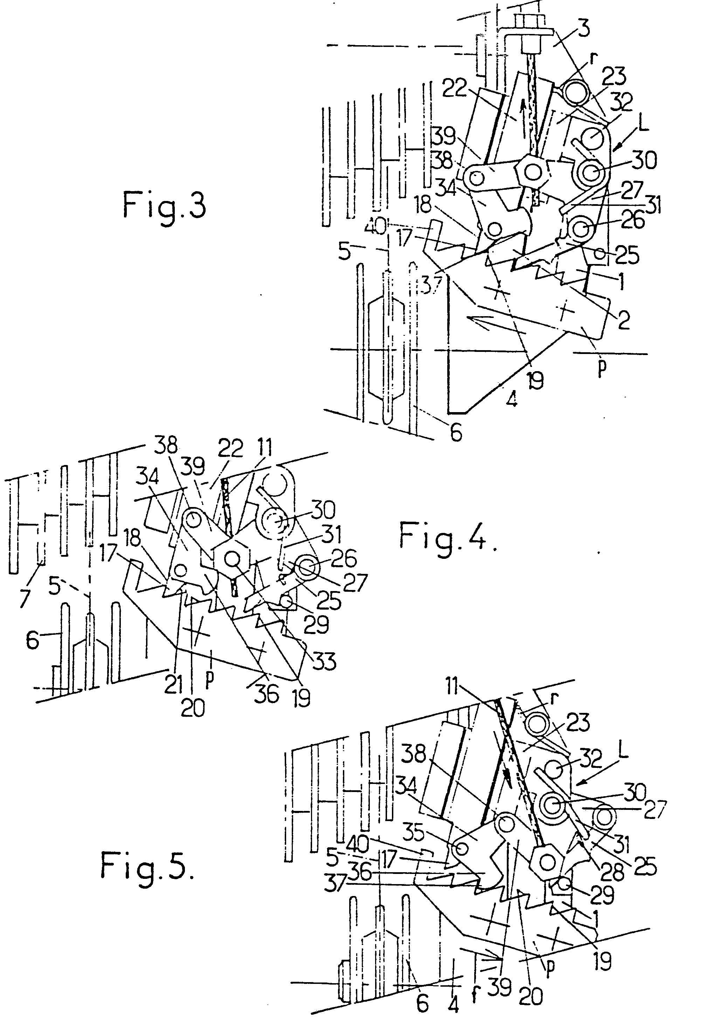

L'effort de rappel élastique exercé entre la pièce p et le support 3 a tendance à déplacer la pièce p de la gauche vers la droite selon la représentation des fig. 2 à 5, c'est-à-dire suivant le sens de la flèche f (fig. 5).

Les moyens de verrouillage V comprennent un verrou 17 formé par une sorte de dent qui s'engage dans un cran c de la pièce p; la forme du verrou 17 et des crans c est choisie de manière telle que la réaction engendrée par l'effort de rappel sur la pièce p au niveau du contact d'une face du verrou, avec une face correspondante du cran, n'ait pas tendance à chasser le verrou hors du cran. Pour cela, la face 18 (fig. 3 et 4) en question du verrou et les faces, telles que 19, des crans c destinés à coopérer avec cette face 18 sont sensiblement orthogonales à la direction moyenne de déplacement de la pièce p.

L'autre face 20 de chaque cran c et l'autre face 21 (fig. 4) du verrou sont inclinées de manière telle qu'un déplacement de la pièce p à l'encontre de l'effort de rappel, c'est-à-dire de la droite vers la gauche des fig. 2 à 5, provoque la sortie du verrou 17 hors du cran c et, éventuellement, son passage dans le cran suivant.

Le verrou 17 est porté par un doigt 22 à déplacement rectiligne, susceptible de coulisser, suivant une direction perpendiculaire à la direction moyenne de la pièce p, dans un manchon 23 solidaire du support 3. Le coulissement du doigt 22 peut être facilité par interposition de billes 24 (fig. 2) entre la surface extérieure de ce doigt et la surface intérieure du manchon.

Les premiers moyens d'encliquetage E comprennent un cliquet 25 articulé sur un axe 26 porté par l'extrémité d'un bras coudé 27. Le cliquet 25 est sollicité élastiquement en rotation, dans le sens contraire des aiguilles d'une montre, par un ressort 28, relativement au bras 27. Un ergot 29, solidaire d'une extension du support 3, est prévu pour former une butée limitant la rotation du cliquet 25.

Le bras 27 est articulé, à l'extrémité de son coude, sur un axe fixe 30 porté par le support 3. Le bras 27 est sollicité élastiquement par un ressort de torsion 31, entourant l'axe 30 et prenant appui sur un pion 32 du support 3; sous l'action de ce ressort 31, le bras 27 a tendance à tourner dans le sens contraire des aiguilles d'une montre autour de l'axe 30.

Le bras coudé 27 est relié à son autre extrémité éloignée de l'axe 26, à l'extrémité du lien souple 11; cette liaison peut être assurée par un dispositif classique 33 de serrage du câble par vis et écrou ou par une biellette intermédiaire.

Lors de la rotation du bras 27 dans le sens des aiguilles d'une montre, autour de l'axe 30, le cliquet 25 est propre à venir en butée dans le fond d'un cran c de la pièce p et à entraîner cette pièce, de la droite vers la gauche quand on regarde les fig. 2 à 5, c'est-à-dire à l'encontre de l'effort de rappel exercé sur la pièce p.

Les dimensions du bras 27 et du cliquet 25 sont déterminées de manière telle qu'à la fin de cette rotation du bras 27 dans le sens des aiguilles d'une montre (ce qui correspond à la fin de la première phase du mouvement du premier type du levier 8) la pièce p et l'organe 4 aient franchi d'environ un demi-cran la position suivante, comme montré sur la fig. 3, ce qui, comme expliqué plus loin, facilite le passage de la chaîne d'un pignon inférieur à un pignon supérieur. Lorsque le levier 8, au cours de la deuxième phase du mouvement du premier type, revient à sa position moyenne, le bras 27 tourne dans le sens contraire des aiguilles d'une montre autour de l'axe 30, ce qui permet à la pièce p de prendre sa position exacte sous l'action de l'effort de rappel, le verrou 17 descendant alors dans le fond du cran c.

Les seconds moyens d'encliquetage G sont agencés pour dégager le verrou 17 d'un cran c et laisser la pièce p se déplacer d'un cran seulement, sous l'action de l'effort de rappel élastique, lors d'un mouvement du deuxième type du levier 8.

Les moyens de verrouillage V font partie des seconds moyens d'encliquetage G, comme visible sur les fig. 2 à 5.

Les seconds moyens d'encliquetage G comprennent un bras 34, sensiblement en forme de coude à angle droit, articulé, vers son sommet, sur un pivot 35 solidaire du verrou 17. En position de repos, une partie de ce bras 34 s'étend sensiblement parallèlement à la pièce p; cette partie comporte à son extrémité une tête 36 arrondie, munie d'un bec 37 propre à pénétrer dans un cran c voisin de celui qui coopère avec le verrou 17.

L'autre partie du bras coudé 34, en position moyenne représentée sur la fig. 2, est sensiblement parallèle à la direction du doigt 22. L'extrémité de cette autre partie du bras 34 porte un pion 38 sur lequel est articulée une biellette 39 de liaison avec une extrémité du bras 27 des premiers moyens d'encliquetage. Cette biellette est également articulée sur l'extrémité de ce bras 27. Cette biellette de liaison 39 constitue les moyens d'interaction entre les premiers moyens d'encliquetage E et le bras 34; ces moyens d'interaction commandent la rotation du bras 34, autour de 35, notamment lors d'un mouvement du deuxième type du levier 8. La rotation du bras 34, lors de la première phase du mouvement du deuxième type du levier 8, s'effectue dans le sens des aiguilles d'une montre autour du pivot 35, et la coopération de la tête 36 avec la face 21 inclinée d'un cran c provoque la sortie du verrou 17 du cran c (fig. 5); le bec 37 arrête la pièce p et constitue les moyens de butée propres à retenir cette pièce en fin de la première phase du mouvement du deuxième type.

Lors de la seconde phase de ce mouvement du deuxième type, le bras coudé reprend une position qui permet le retour du verrou 17 dans le cran c suivant.

L'extrémité, située à gauche sur les fig. 2 à 5, de la pièce p comporte une paroi de butée 40 dont la hauteur est supérieure à celle des crans c et est suffisante pour empêcher l'échappement du verrou 17 lorsque ce dernier est au contact de la paroi 40 (fig. 2) et que, par inadvertance, on manœuvre le levier 8 suivant un mouvement du deuxième type qui, normalement, déplace la pièce p vers la droite.

Il est clair que l'écartement entre les crans successifs c de la pièce p est établi en correspondance avec l'écartement existant entre les pignons successifs 7.

Cela étant, le fonctionnement du dispositif sélecteur du mode de réalisation des fig. 1 à 5 est le suivant:

La position de départ considérée sera celle de la fig. 2 pour laquelle la chaîne 5 est enroulée sur le plus petit pignon 7, le verrou 17 étant engagé dans le cran extrême gauche de la pièce p, la face 18 de ce verrou étant au contact de la paroi 40.

Pour faire passer la chaîne 5 sur le pignon d'un diamètre supérieur, immédiatement voisin du plus petit pignon, c'est-à-dire pour déplacer la pièce p de la droite vers la gauche d'un cran, on actionne le levier 8 pour lui communiquer un mouvement du premier type (fig. 1), c'est-à-dire que, dans la première phase du mouvement, on exerce une traction sur le câble 11 et, dans la deuxième phase du mouvement, on relâche ce câble 11 pour le retour à la position moyenne.

La traction exercée sur le câble 11 provoque une rotation du bras 27 dans le sens des aiguilles d'une montre autour de l'axe fixe 30 et la venue du cliquet 25 dans le fond d'un cran c. Le cliquet pousse la pièce p de la droite vers la gauche. Le verrou 17 glisse contre la face inclinée 21 du cran c dans lequel il est engagé, ce qui provoque la montée de ce verrou 17 et de la tige 22. La traction sur le câble 11 a provoqué, en outre, la rotation du bras 34 autour du pivot 35 dans le sens contraire des aiguilles d'une montre, ce qui fait sortir complètement la tête 36 du cran c et libère le passage pour le mouvement de la pièce p de la droite vers la gauche. Dès que le déplacement commandé par le cliquet 25 correspond à l'amplitude d'un cran c, le verrou 27 franchit le sommet séparant les deux crans voisins et, repoussé par les moyens élastiques r, ce verrou 17 plonge dans le fond du cran situé immédiatement à droite par rapport à celui dans lequel il se trouvait.

Toutefois, la première phase du mouvement du premier type, correspondant à la traction du câble 11, n'est pas totalement terminée; le cliquet 25 continue donc à déplacer la pièce p vers la gauche, ce qui provoque à nouveau la montée du verrou 17 dans le nouveau cran où il est engagé.

A la fin de cette première phase de traction, les éléments du dispositif occupent les positions représentées sur la fig. 3; on voit que le verrou 17 est en appui environ à mi-longueur de la face inclinée 21 du cran voisin, par rapport à la fig. 2.

Ainsi, la position de l'organe 4 correspondant au pignon immédiatement voisin du pignon inférieur a été dépassée d'environ un demi-cran, ce qui facilite le passage de la chaîne d'un pignon de diamètre inférieur à un pignon de diamètre supérieur.

Lors de la deuxième phase du mouvement du premier type, le câble 11 est relâché; le bras 27 tourne dans le sens contraire des aiguilles d'une montre autour de l'axe 30 et dégage le cliquet 25; le verrou 17, sous l'effet du rappel élastique, pénètre dans le fond du cran et donne à la pièce p et à l'organe 4 la position exacte correspondant à celle du pignon immédiatement supérieur. La position des différents éléments du dispositif sélecteur en fin de ce mouvement du premier type est représentée sur la fig. 4.

Il est à noter que l'on peut prévoir au niveau du dispositif sélecteur, par exemple sur le bras 27, une butée qui, en fin de course du mouvement du premier type, vient en appui contre le support 3 de manière à limiter l'amplitude de la rotation du bras 27 indépendamment de l'amplitude du mouvement du levier 8.

On comprend aisément que le passage de la chaîne sur le pignon supérieur, qui suit immédiatement, est obtenu en actionnant le levier 8 suivant un nouveau mouvement du premier type.

Ainsi, à chaque mouvement du premier type, on fait passer la chaîne d'un pignon inférieur au pignon immédiatement supérieur, sans avoir à se préoccuper de l'exactitude de l'amplitude du mouvement communiqué au levier 8, ni de l'exactitude des positions moyennes et extrêmes de ce levier.

Le passage de la chaîne d'un pignon supérieur à un pignon immédiatement inférieur est obtenu en actionnant le levier 8 suivant un mouvement du deuxième type.

La position de départ considérée sera celle de la fig. 4 pour laquelle la chaîne se trouve sur le pignon immédiatement supérieur au plus petit pignon.

En actionnant le levier 8 suivant le mouvement du deuxième type, on provoque un relâchement du câble 11 dans la première phase du mouvement, comme montré sur la fig. 5. Le bras 27 tourne alors dans le sens contraire des aiguilles d'une montre autour de l'axe 30. La biellette 39 entraîne le pion 38 et le bras 34 en rotation, suivant le sens des aiguilles d'une montre, autour du pivot 35 porté par le verrou 17. La tête 36 pénètre dans un cran et prend appui contre la face inclinée 20 de ce cran. La coopération de la tête 36 et de cette face inclinée engendre, en réaction à l'effort de traction exercé par la biellette 39 sur le pion 38, un effort sur le pivot 35 qui provoque la montée du verrou 17 et le dégagement complet de ce verrou par rapport à la face 19 du cran dans lequel il était engagé.

La pièce p étant ainsi libérée se déplace, sous l'action de l'effort de rappel élastique exercé entre cette pièce et le support 3, de la gauche vers la droite. La tête 36 glisse contre la face inclinée 21 du cran et pénètre plus à fond dans ce cran. Ce mouvement de la pièce p vers la droite est possible jusqu'à ce que le bec 37 vienne coopérer avec la face 19 d'un cran pour arrêter la course de la pièce p.

Les dimensions des différents éléments sont ajustées de manière que dans cette position intermédiaire (fig. 5), qui correspond à la fin de la première phase du mouvement du deuxième type, la pointe du verrou 17 ait franchi la pointe séparant le cran dans lequel se trouvait précédemment le verrou du cran immédiatement situé à gauche. La pointe du verrou 17 se trouve donc au droit de la face inclinée du cran voisin.

Lors de la deuxième phase du mouvement du deuxième type, le retour à la position moyenne du levier se traduit par une traction sur le câble 11; le bras 27 des premiers moyens d'encliquetage va tourner, dans le sens des aiguilles d'une montre, autour de l'axe 30 pour reprendre la position de la fig. 2. Le bras 34 des seconds moyens d'encliquetage G tourne dans le sens contraire des aiguilles d'une montre autour du pivot 35 de telle sorte que le bec 37 se dégage du sommet du cran et autorise un nouveau déplacement de la pièce p vers la droite. Simultanément, le verrou 17 descend dans le cran suivant et retient la pièce p dans la position de la fig. 2 qui correspond à un déplacement d'un cran vers la droite, par rapport à la fig. 4.

Il apparaît donc clairement qu'à chaque fois où l'on actionne le levier de commande 8 suivant un mouvement du deuxième type, on provoque le passage de la chaîne d'un pignon au pignon immédiatement inférieur, c'est-à-dire le déplacement de la pièce p d'un seul cran, de la gauche vers la droite.

Il convient de remarquer, en se reportant à la fig. 1, que lors de la première phase du mouvement du premier type du levier 8, c'est-à-dire lors du passage de la position B moyenne — en trait plein — à la position extrême A — en trait mixte —, on doit exercer une traction sur le câble 11 pour vaincre la résistance des moyens de rappel élastiques classiques du dérailleur D; dans la deuxième phase de ce mouvement du premier type, le retour du levier 8 à sa position moyenne est aidé par ces moyens de rappel du dérailleur.

La position moyenne est déterminée par la butée du levier 8 sur l'extrémité du ressort de torsion 12.

Lors de la première phase du mouvement du deuxième type (levier 8 déplacé de sa position moyenne vers la position C), il faut vaincre la résistance du ressort de torsion 12, les moyens élastiques de rappel du dérailleur D aidant à ce déplacement; toutefois, la force des moyens de rappel élastiques du dérailleur D est inférieure à celle du ressort 12.

Pour la deuxième phase du mouvement du deuxième type, le ressort 12 aide au retour du levier 8 à la position moyenne.

Le mode de réalisation des fig. 1 à 5 concernait un dispositif sélecteur agencé pour être adapté sur un dérailleur classique, à parallélogramme, ainsi que le dérailleur équipé du dispositif sélecteur de l'invention.

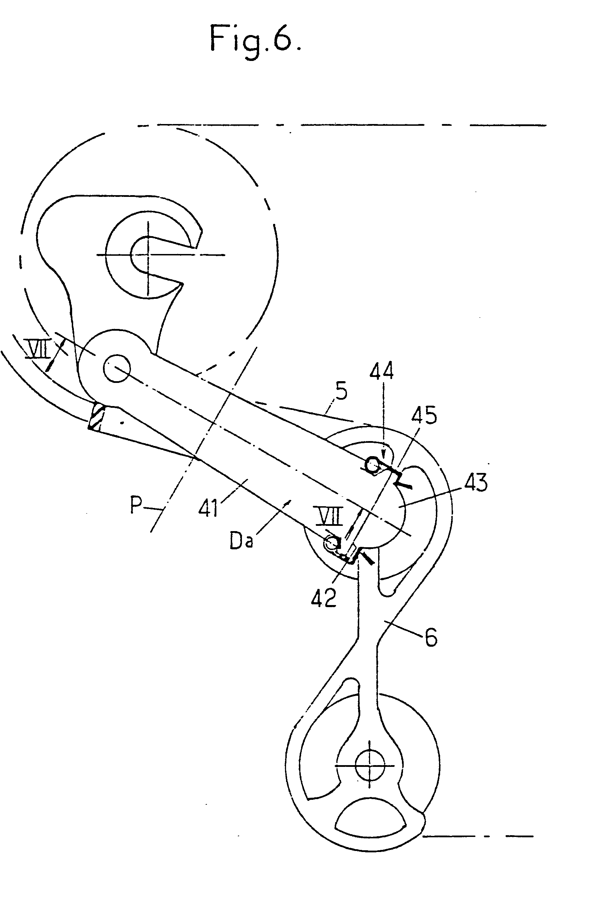

En se reportant aux fig. 6 à 8, on peut voir un dérailleur de bicyclette, pour pignons arrière, spécialement conçu en fonction d'une commande par dispositif sélecteur conforme à l'invention.

Les éléments de ce dérailleur et du dispositif sélecteur identiques, ou jouant des rôles analogues à des éléments déjà décrits avec référence aux fig. 1 à 5, sont désignés par les mêmes références (lettres ou chiffres), éventuellement suivis de la lettre a; la description de ces éléments et de leur fonctionnement ne sera pas reprise en détail, puisqu'elle est semblable à celle donnée avec référence aux fig. 1 à 5.

Le dérailleur Da comprend un boîtier 41 dont la forme est visible d'après les fig. 6 à 8; ce boîtier a une structure creuse dont les sections par des plans parallèles au plan de trace P (fig. 6) ont un contour fermé. Ce boîtier présente donc une inertie maximale pour un poids minimal.

L'extrémité inférieure 42 du boîtier 41 est ouverte. Un fond 43, par exemple en forme de demi-coquille, est prévu pour fermer cette extrémité 42, la fixation de ce fond sur l'extrémité 42 est assurée par un dispositif 44 à démontage rapide, par exemple du genre grenouillère et comportant des crochets 45, articulés sur le boîtier 41, propres à venir serrer l'un contre l'autre des rebords du fond 43 et de l'extrémité 42 (fig. 6).

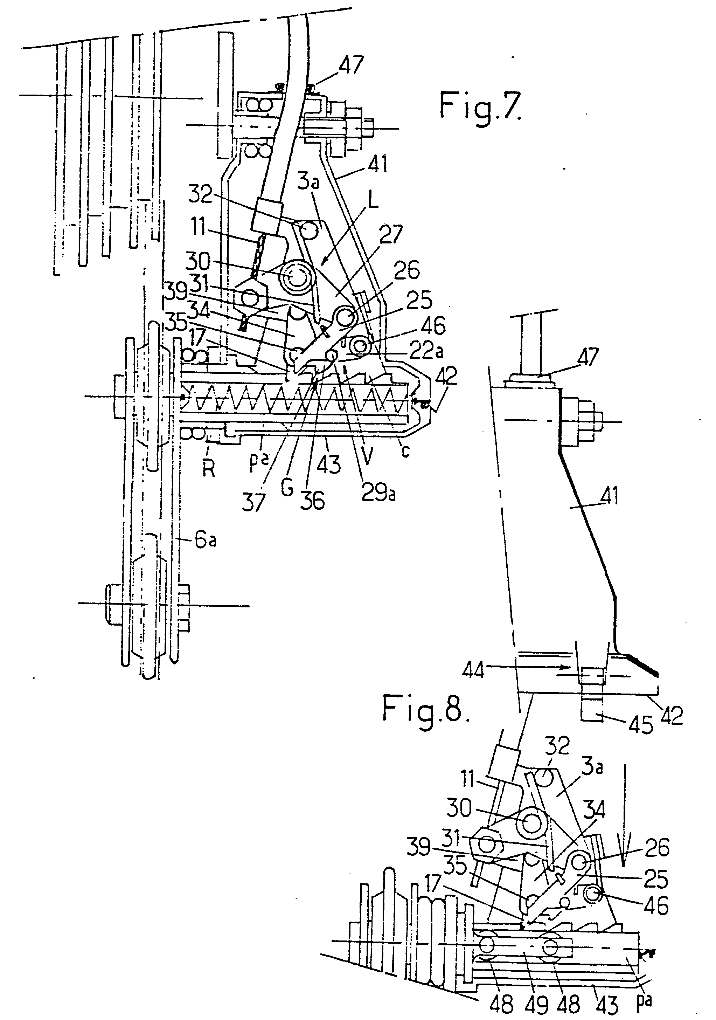

L'ensemble du dispositif sélecteur est supporté par le fond 43 de telle sorte que le démontage de ce fond permet de retirer l'ensemble du mécanisme, comme représenté — en vue éclatée — sur la fig. 8. Le support 3a est formé par une paroi solidaire du fond 43.

La pièce pa, munie de crans, est formée par une crémaillère tubulaire de section cylindrique; les moyens de rappel élastiques exerçant un effort de rappel entre cette pièce pa et le support 3a sont constitués par un ressort en hélice R logé à l'intérieur de la pièce pa et accroché à une extrémité (située sur la droite sur la fig. 7) au fond 43 et donc au support 3a solidaire de ce fond; l'autre extrémité du ressort R est accrochée au guide 6a solidaire en translation de la crémaillère pa.

Le verrou 17, au lieu d'être porté par un doigt coulissant, comme dans le cas des fig. 2 à 5, est porté par un doigt 22a articulé, à son extrémité éloignée du verrou 17, sur un axe 46 porté par le support 3a. La position de cet axe est telle que le verrou 17 s'arc-boute dans un cran c pour maintenir la crémaillère pa contre l'action du ressort R.

Le câble 11 et sa gaine pénètrent dans le boîtier 41 par l'extrémité supérieure qui peut être équipée, éventuellement, d'un joint 47.

On notera que la disposition des éléments du dispositif sélecteur selon la solution des fig. 6 à 8 est plus compacte, la biellette 39 et le bras 34 des seconds moyens d'encliquetage étant situés du même côté du câble 11 que le bras 27.

Le guidage du mouvement de translation du guide 6a peut être assuré par des galets 48 (fig. 8) supportés par des branches 49, solidaires en translation du guide 6a, et prévues de part et d'autre de la crémaillère pa. Ces galets 48 roulent dans des rainures de guidage prévues dans le fond 43 et, éventuellement, dans le boîtier 41.

Le fonctionnement du dérailleur des fig. 6 à 8 est identique à celui décrit avec référence aux fig. 2 à 5; on notera simplement que le verrou 17 décrit un arc de cercle autour de l'axe 46.

On peut noter, quel que soit le mode de réalisation du dispositif du sélecteur, qu'il peut convenir pour n'importe quel nombre de vitesses, puisque l'amplitude du mouvement de la pièce p, pa n'est pas limitée par l'amplitude des mouvements du levier de commande 8.

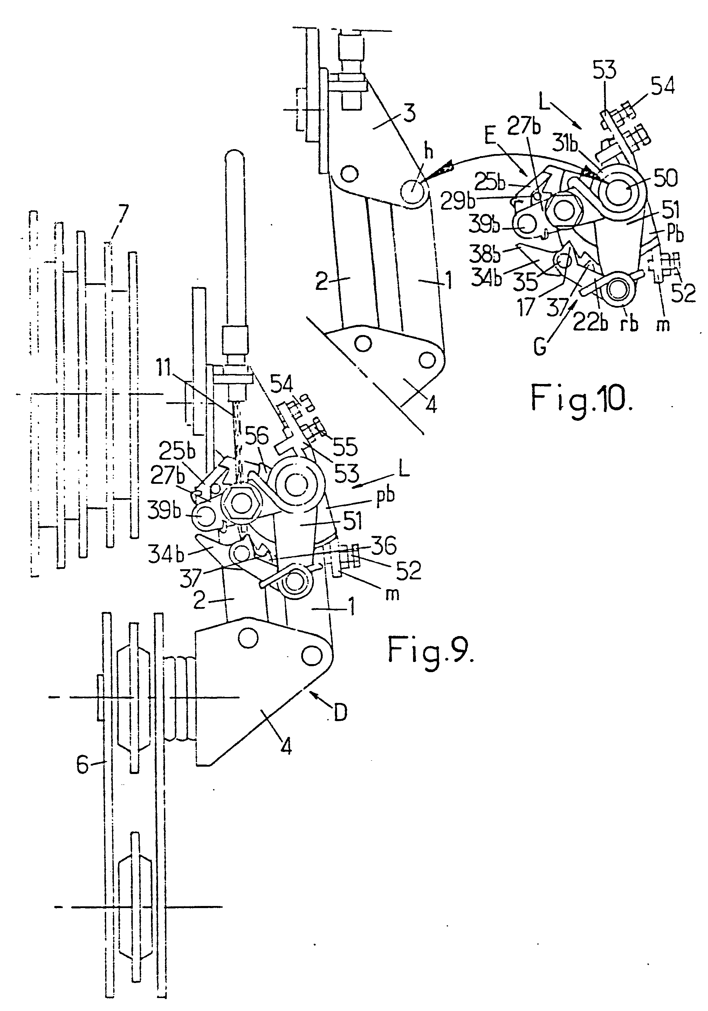

Les fig. 9 à 12 concernent un mode de réalisation dans lequel les moyens de liaison L, c'est-à-dire la pièce munie de crans, les premiers et seconds moyens d'encliquetage et les moyens de verrouillage, sont réalisés sous la forme d'un ensemble propre à être monté sur un axe d'articulation. Ce mode de réalisation est destiné à la commande d'un organe 4 qui est relié au support 3 par au moins une branche 1 articulée sur un axe h porté par le support 3. L'exemple dessiné est celui d'un dérailleur classique D à parallélogramme, pour pignons arrière de bicyclette, semblable à celui visé aux fig. 1 à 5.

Les éléments du dispositif sélecteur et des moyens de liaison L analogues, ou jouant des rôles semblables à des éléments déjà décrits avec référence aux figures précédentes, sont désignés par les mêmes références (lettres ou chiffres), éventuellement suivies de la lettre b. La description de ces éléments et de leur fonctionnement ne sera pas reprise en détail.

Il convient de noter, cependant, que la pièce pb est constituée par un secteur circulaire, muni de crans, centré sur l'axe h; pour cela, le secteur pb comporte un trou 50 pour le montage en bout de l'axe h qui fait saillie relativement au support 3. La pièce pb comporte une butée unilatérale formée par une patte s'étendant radialement au-delà du contour du secteur et munie d'une vis de butée réglable 52, destinée à prendre appui contre la face extérieure de la branche 1, comme montré sur la fig. 9.

Les premiers moyens d'encliquetage E comprennent un levier 27b sensiblement rectiligne, jouant un rôle semblable à celui du bras 27 des réalisations précédentes. Ce levier 27b est articulé sur l'axe h; pour cela, le levier 27b comporte un alésage de centrage sur cet axe h qui vient se superposer sur l'alésage 50. Le cliquet 25b est prévu à l'extrémité du levier 27b éloignée de l'axe h; le cliquet 25b est articulé sur un axe 39b qui fait saillie par rapport au plan du levier 27b de manière à former un ergot constituant les moyens d'interaction avec le bras 34b des seconds moyens d'encliquetage. Le levier 27b est relié, dans sa partie médiane, à l'extrémité du câble 11. Ce levier 27b est soumis à un couple de rappel qui a tendance à le faire tourner dans le sens contraire des aiguilles d'une montre autour de l'axe h, sous l'action d'un ressort de torsion 31b.

Les seconds moyens d'encliquetage G comprennent un levier 51 muni d'un trou semblable au trou 50, pour son articulation sur l'axe h; ce levier 51 comporte une extension 53 de manière à prendre appui, par une vis de butée réglable 54, contre le support 3; par le jeu des différents moyens de rappel élastiques, ce levier 51 est sollicité constamment de manière que l'extension 53 soit maintenue en appui contre le support 3 de telle sorte que le levier est bloqué par rapport au support 3.

Le levier 51 porte, à son extrémité éloignée de l'axe h, le doigt articulé 22b muni, à une extrémité, du verrou 17 destiné à pénétrer dans les crans c de la pièce pb. Ce doigt 22b est sollicité élastiquement dans le ressort rb de manière à s'engager dans les crans.

Le susdit bras 34b des seconds moyens d'encliquetage ne forme pas un coude aussi prononcé que le bras 34 des solutions précédentes. La forme de ce bras 34b apparaît bien sur les fig. 10 à 13. On retrouve, à une extrémité de ce bras, la tête 36 et le bec 37 formant moyen de retenue des crans. Ce bras 34b est articulé sur le pivot 35 porté par le verrou 17.

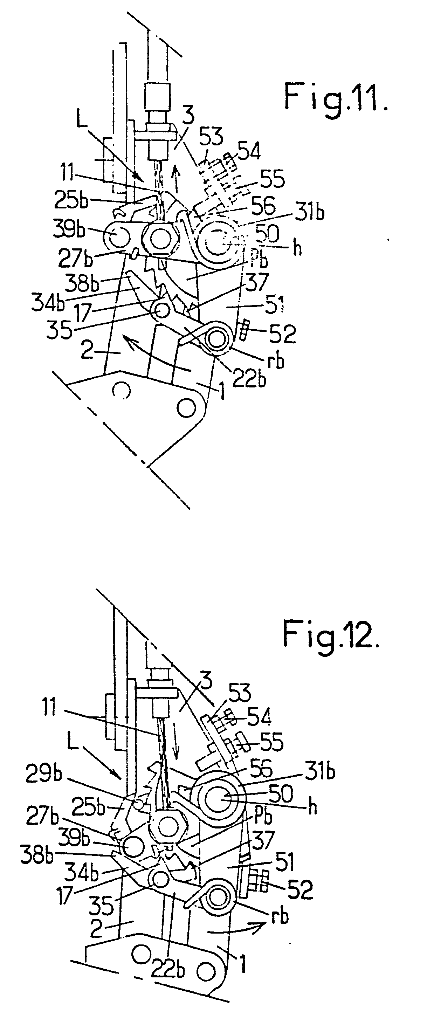

On peut remarquer que l'extension 53 porte une autre butée réglable 55 destinée à limiter la course angulaire du levier 27b par coopération avec une partie 56 (voir fig. 11) de ce levier.

Le montage de l'ensemble des moyens de liaison L sur le dérailleur est illustré par la fig. 10; on voit qu'il suffit d'engager les trous superposés des différents éléments sur l'axe h, puis de relier le câble 11 au bras 27b. La butée 52 de la pièce pb reste en appui contre la branche 1 du fait de l'action du ressort de rappel (non visible) classique du dérailleur.

Le fonctionnement du dispositif des fig. 9 à 12 est analogue à celui décrit précédemment.

La position de départ considérée est celle de la fig. 9.

En actionnant le levier de commande 8 selon un mouvement du premier type, on exerce, dans la première phase, une traction sur le câble 11.

Le levier 27b est entraîné, en rotation, dans le sens des aiguilles d'une montre, autour de l'axe h; le cliquet 25b engagé dans un cran entraîne la pièce pb et la branche 1 en rotation dans le même sens autour de l'axe h. L'organe 4 (guide de la chaîne) est déplacé en conséquence.

La position des différents éléments à la fin de la première phase d'un mouvement du premier type est représentée sur la fig. 11; la position correspondant à celle du pignon immédiatement supérieur a été dépassée de manière à faciliter le passage de la chaîne; cette position est déterminée par la venue en butée de la partie 56 contre la butée 55; le verrou 17 se trouve à peu près à mi-longueur de la face inclinée d'un cran.

Lors de la deuxième phase de ce mouvement du premier type, le relâchement du câble autorise une rotation de la pièce pb dans le sens contraire des aiguilles d'une montre, de telle sorte que le verrou 17 vient se loger dans le fond du cran et le guide 6 de la chaîne reprend la position exacte correspondant au pignon immédiatement supérieur.

La fig. 12 illustre la position des éléments à la fin de la première phase d'un mouvement du deuxième type qui correspond au passage de la chaîne d'un pignon supérieur au pignon immédiatement inférieur.

A la fin de cette première phase, du fait du relâchement du câble 11, le levier 27b sollicité par le ressort 31b (ce ressort prenant appui contre l'autre levier 51) tourne dans le sens contraire des aiguilles d'une montre autour de l'axe h, et relativement au levier 51 et à la pièce pb.

Le cliquet 25b sort du cran et autorise la rotation de la pièce pb dans le sens contraire des aiguilles d'une montre sous l'action du ressort de rappel du dérailleur.

L'ergot 39b vient coopérer avec l'extrémité 38b du bras 34b, de manière à faire tourner ce bras 34b autour du pivot 35 dans le sens contraire des aiguilles d'une montre, ce qui fait entrer le bec 37 dans un cran de manière à retenir la pièce pb à la fin de cette première phase du mouvement du deuxième type.

La pointe du verrou 17 a franchi le sommet séparant deux crans voisins.

Lors de la deuxième phase, le verrou 17 pénètre dans le cran suivant et retient la pièce pb dans la nouvelle position.

Dans tous les modes de réalisation précédents, lors de la première phase d'un mouvement du deuxième type, le verrou est dégagé d'un cran de la pièce par un déplacement dans le plan moyen du verrou et de la pièce suivant une direction sensiblement perpendiculaire à la direction suivant laquelle les crans se succèdent.

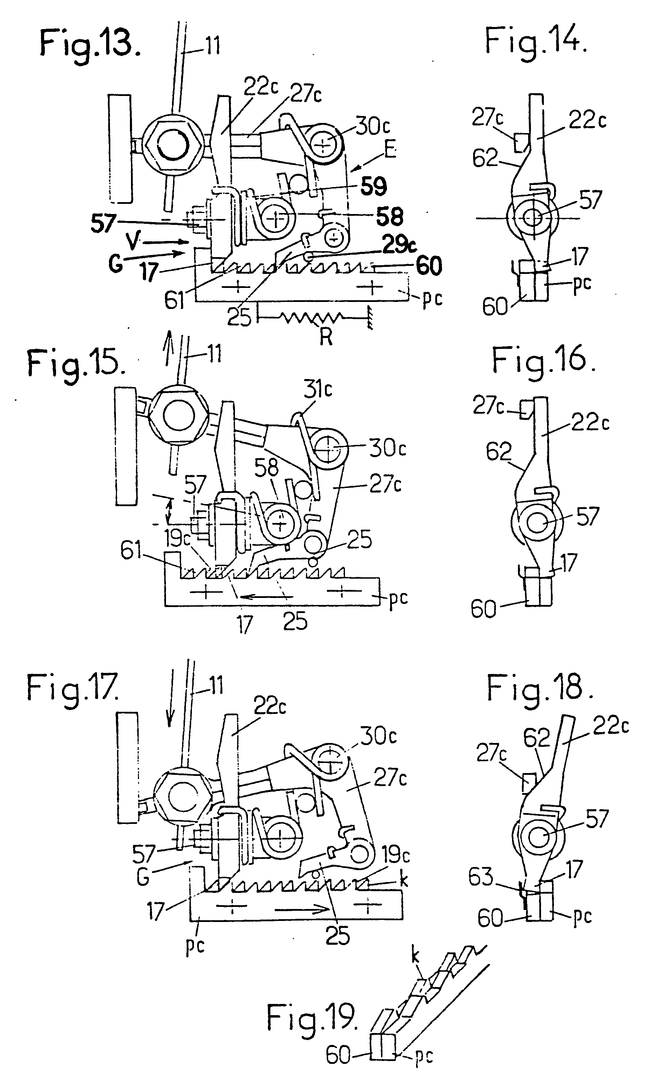

Dans le mode de réalisation représenté schématiquement sur les fig. 13 à 19, le verrou est dégagé, lors de cette première phase d'un mouvement du deuxième type, par un déplacement dans un plan perpendiculaire à la direction suivant laquelle les crans se succèdent.

Les éléments du dispositif des fig. 13 à 19 analogues à des éléments déjà décrits sont désignés par les mêmes références (chiffres ou lettres) suivies, éventuellement, de la lettre c. La description de cette variante sera limitée aux modifications notables par rapport aux solutions précédentes.

Le verrou comprend la dent 17 propre à s'engager dans les crans de la pièce pc et un bras 22c articulé, dans une région voisine de son extrémité munie de la dent 17, sur une tige 57 parallèle à la direction de succession des crans c de la pièce pc. Lorsque cette pièce est rectiligne, la tige 57 est parallèle à la direction moyenne de la pièce, comme montré sur les dessins. La tige 57 est elle-même articulée sur un axe 58 perpendiculaire au plan défini par les directions moyennes du bras 22c et de la pièce pc.

Un ressort 59 assure une double fonction de rappel, à savoir un rappel de la tige 57 autour de l'axe 58, dans le sens contraire des aiguilles d'une montre quand on regarde les fig. 13, 15 et 17, et un rappel du bras 22c autour de la tige 57 dans le sens contraire des aiguilles d'une montre quand on regarde les fig. 14, 16 et 18; une butée est prévue pour maintenir en position correcte le bras 22c.

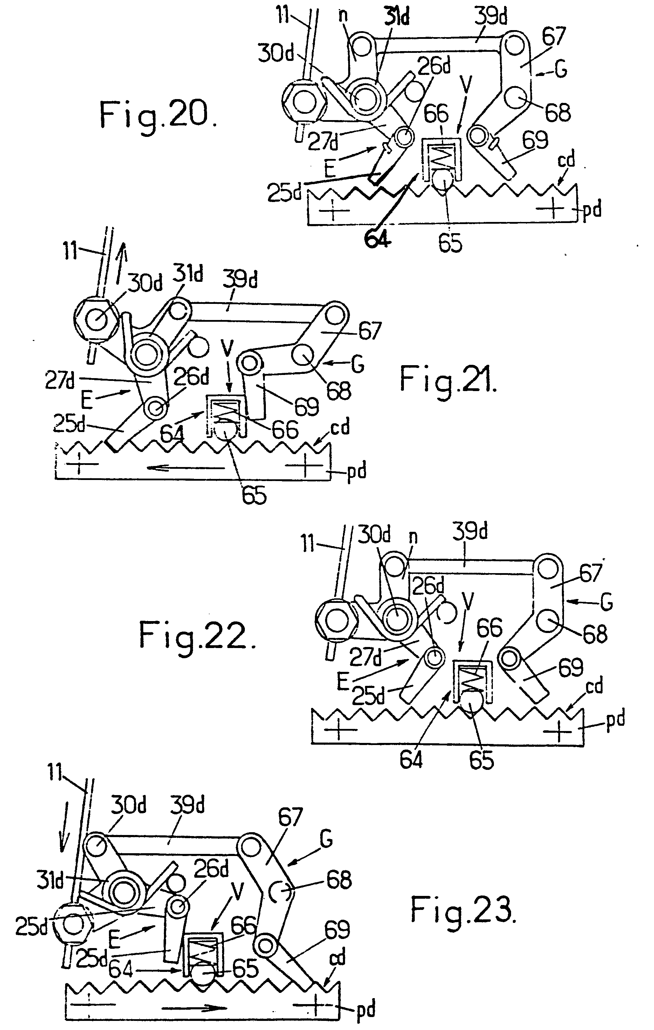

Une pièce 60, semblable à la pièce pc, mais décalée d'un demi-cran par rapport à cette dernière, est juxtaposée à cette pièce, comme bien visible sur la fig. 19. Ainsi, les proéminences séparant deux crans voisins de la pièce 60, apparaissent, sur les fig. 13, 15 et 17, à travers les crans de la pièce pc.

La forme de la dent 17 est déterminée de manière à pouvoir passer dans la section 61 délimitée par deux proéminences voisines des deux pièces pc et 60, solidaires l'une de l'autre.

La pièce pc est soumise à un effort de rappel élastique, relativement au support (non montré), de la gauche vers la droite selon les fig. 13, 15 et 17 par un ressort R (fig. 13).

Le cliquet 25 peut, indifféremment, être agencé pour coopérer soit avec les crans de la pièce pc soit avec les crans de la pièce 60. De même, le verrou 17, pour la position normale du bras 22c, peut coopérer soit avec les crans de la pièce pc, soit avec ceux de la pièce 60. Dans l'exemple représenté, le verrou 17 coopère, en position normale, avec les crans de la pièce pc, tandis que le cliquet 25 coopère avec les crans de la pièce 60.

Le bras coudé 27c des premiers moyens d'encliquetage sert de butée de retenue au bras 22c, comme visible sur les fig. 14 et 16. La partie haute de ce bras 22c a une forme telle que le déplacement du bras 27c correspondant à une rotation dans le sens des aiguilles d'une montre autour de l'axe 30 selon les fig. 13 et 15 (première phase du mouvement du premier type) ne fait pas varier la position angulaire du bras 22c autour de la tige 57.

Par contre, le bras 22c comporte, vers sa partie inférieure, une rampe transversale 62 (fig. 14, 16 et 18) propre à coopérer avec le bras 27c lorsque ce dernier tourne dans le sens contraire des aiguilles d'une montre autour de l'axe 30c (fig. 17 et 18), ce qui correspond à la première phase du mouvement du deuxième type. Le bras 22c est alors déplacé en rotation, suivant le sens des aiguilles d'une montre quand on regarde les fig. 16 et 18, autour de la tige 57. Le verrou 17 échappe de la pièce pc par un déplacement perpendiculaire au plan de cette pièce pour venir coopérer avec les crans de la pièce 60. Une paroi 63 formant rebord est prévue sur la pièce 60 pour limiter la rotation du bras 22c. La pièce pc se déplace alors d'un demi-cran vers la droite, sous l'action des moyens de rappel élastiques, jusqu'à ce que la dent 17 vienne en appui contre la face droite k d'un cran de la pièce 60.

Le fonctionnement du dispositif des fig. 13 à 19 est semblable à celui déjà décrit.

Pour le mouvement du premier type du levier de commande 8, la première phase correspond à une traction sur le câble 11 et le bras 27c tourne dans le sens des aiguilles d'une montre autour de l'axe 30c; le cliquet 25 pousse l'ensemble de la pièce pc et de la pièce 60 vers la gauche selon la représentation des fig. 13, 15 et 17. Le verrou 17 peut franchir la proéminence séparant deux crans de la pièce pc grâce à la possibilité de rotation de la tige 57 autour de l'axe 58.

La position des divers éléments vers la fin de la première phase du mouvement du premier type est représentée sur la fig. 15; la pièce pc s'est déplacée d'un cran et demi environ. Lors de la deuxième phase, la pièce reprendra sa position exacte par la venue en butée du verrou 17 contre la face droite 19c du cran dans lequel il se trouve.

Au cours de ce mouvement du premier type, le bras 22c n'a pas tourné autour de la tige 57.

Lors du mouvement du deuxième type, qui commence par un relâchement du câble 11 (fig. 17), le cliquet 25 est dégagé du cran de la pièce et le bras 22c bascule, comme représenté sur la fig. 18, de manière à passer dans un cran de la pièce 60. Sous l'action du rappel élastique, la pièce pc et la pièce 60 se déplacent vers la droite de la fig. 17 d'un demi-cran jusqu'à ce que le verrou 17 vienne en appui contre la face droite k du cran de la pièce 60.

Lors de la deuxième phase du mouvement du deuxième type, le bras 22c reprend la position angulaire des fig. 14 et 16 et entre donc dans le cran suivant de la pièce pc; cette dernière se déplace d'un demi-cran sous l'effet du rappel élastique jusqu'à ce que la face droite 19c de son cran vienne en appui contre le verrou 17.

Dans tous les modes de réalisation décrits jusqu'à présent, la pièce munie de crans est soumise à un effort de rappel élastique et les seconds moyens d'encliquetage, en quelque sorte, laissent cette pièce se déplacer d'un cran seulement sous l'action de l'effort de rappel.

Les fig. 20 à 23 représentent schématiquement un mode de réalisation du dispositif sélecteur dans lequel, le cas échéant, aucun effort de rappel élastique n'est exercé sur la pièce munie de crans; les seconds moyens d'encliquetage sont alors agencés pour commander, en quelque sorte, positivement le déplacement de la pièce pour le mouvement du deuxième type.

Les éléments jouant des rôles identiques à des éléments déjà décrits sont désignés par les mêmes références (chiffres ou lettres), éventuellement suivies de la lettre d.

Les moyens de verrouillage V sont distincts des seconds moyens d'encliquetage G. Ces moyens de verrouillage V, ainsi que les crans cd de la pièce pd, sont agencés de manière à permettre le déplacement de la pièce dans un sens (de la droite vers la gauche par exemple quand on regarde les fig. 20 à 23) ou dans le sens opposé, en réponse à une action suffisamment forte exercée sur cette pièce.

Pour cela, les moyens de verrouillage V sont formés, notamment, par un dispositif 64 du genre billage comprenant une bille 65 sollicitée par un ressort 66 pour s'engager dans un cran cd de la pièce pd et maintenir cette dernière en position. Les faces limitant les crans cd ont des inclinaisons opposées, symétriques par rapport à un plan perpendiculaire à la direction de la pièce pd.

On retrouve, pour les premiers moyens d'encliquetage E, un bras coudé 27d muni d'un cliquet 25d. L'extrémité du câble 11 est accrochée à ce bras. Le bras 27d comprend une extension radiale n sur laquelle est articulée une biellette 39d formant des moyens d'interaction avec les seconds moyens d'encliquetage G. Ces seconds moyens d'encliquetage sont situés, comme visible sur les fig. 20 à 23, du côté opposé aux moyens E par rapport aux moyens de verrouillage V. Ces moyens G sont agencés sensiblement symétriquement par rapport au plan perpendiculaire à la ligne moyenne de la pièce pd passant par les moyens de verrouillage V. Ces moyens G comprennent donc un bras 67 articulé sur un axe fixe 68 et muni à son extrémité voisine de la pièce pd d'un cliquet 69 destiné à travailler en sens contraire du cliquet 25d. L'autre extrémité du bras 67 est articulée à l'extrémité de la biellette 39d.

Le fonctionnement du dispositif est illustré sur les fig. 21 à 23. A la fin de la première phase d'un mouvement du premier type, les divers éléments occupent la position représentée sur la fig. 21, pour laquelle le cliquet 25d est en appui contre le fond d'un cran et vient déplacer la pièce pd d'un cran et demi environ; lors de la deuxième phase de ce premier mouvement, la bille 65 revient dans le fond du cran et replace la pièce pd dans la position exacte représentée sur la fig. 22.

La fig. 23 représente la position des divers éléments à la fin de la première phase d'un mouvement du deuxième type. La pièce pd s'est déplacée, sous l'action du cliquet 69, d'un cran vers la droite.

Lors de la deuxième phase du mouvement du deuxième type, la pièce pd ne se déplace pas.

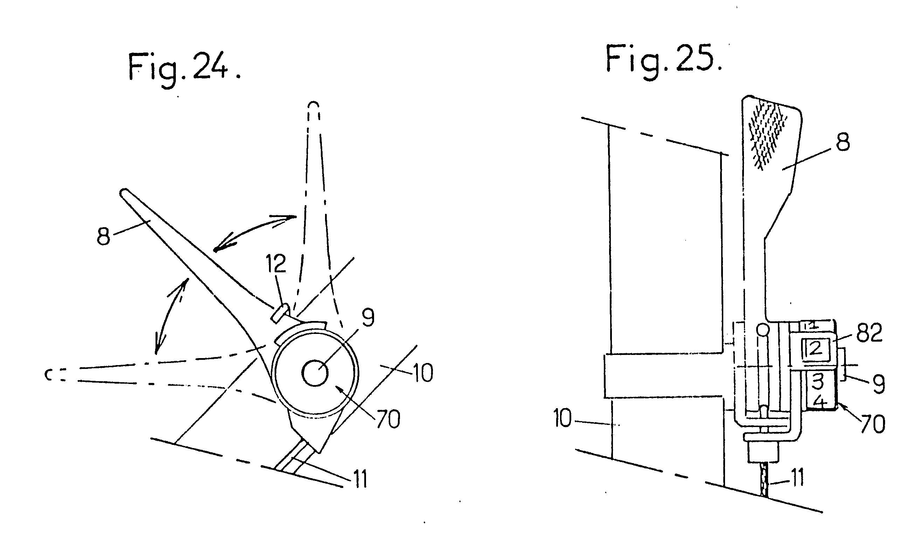

Les fig. 24 à 32 sont relatives à des moyens d'affichage propres à indiquer la position de l'organe 4, au niveau du levier de commande 8. Dans le cas d'un dérailleur, ces moyens d'affichage indiquent donc le pignon arrière sur lequel est enroulée la chaîne de la bicyclette.

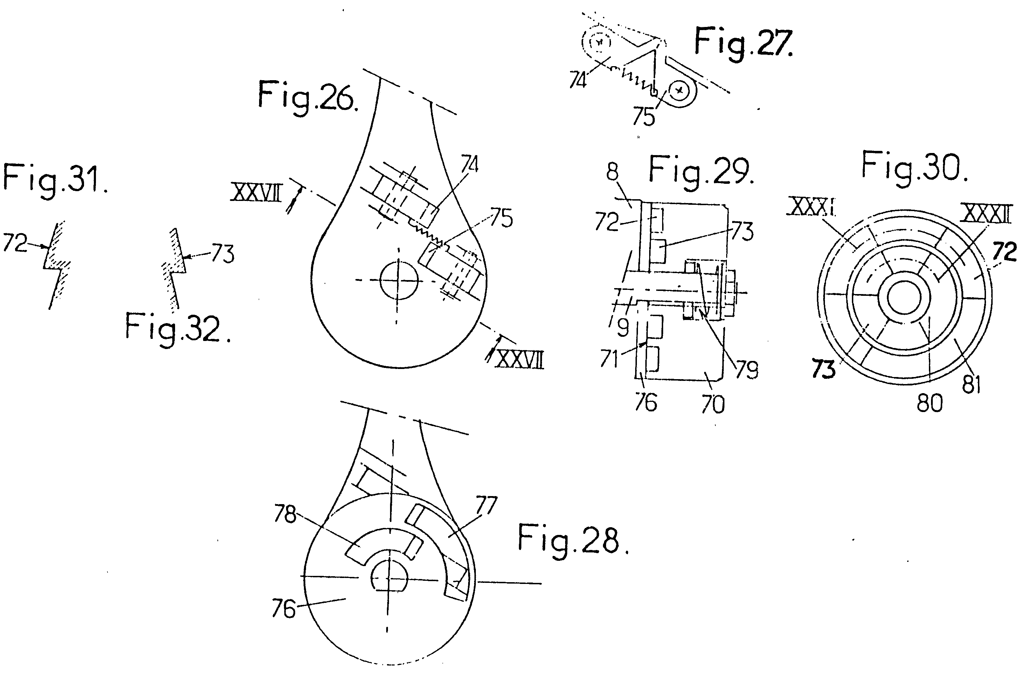

Ces moyens d'affichage comprennent un chapeau rotatif 70, en forme de tambour, monté sur l'axe 9 du levier 8; ce tambour 70 comporte, du côté du levier 8, une piste 71 munie de deux dentures inversées 72, 73, prévues suivant des zones circulaires concentriques. Les fig. 31 et 32 illustrent l'inversion du sens des dentures 72, 73.

La base circulaire du levier 8 comporte des premiers et des seconds moyens d'entraînement formés respectivement par des cliquets 74 et 75 propres à faire entraîner le tambour 70, par le levier 8, uniquement pendant la première phase d'un mouvement du levier du premier type ou du deuxième type; le tambour 70 reste immobile lors de la deuxième phase de ces mouvements, c'est-à-dire lors du retour du levier 8 à sa position moyenne. Un disque 76, monté fixe en rotation sur l'axe du levier 8, est placé entre ce levier et la piste du tambour 70. Ce disque 76 comporte deux fenêtres 77, 78, s'étendant suivant des arcs de cercle de rayons différents correspondant aux rayons des zones d'action des extrémités des cliquets74 et 75. La fenêtre 78 autorise l'entraînement du tambour70 par le cliquet 75 et la denture 73 lors de la première phase du mouvement du premier type (le levier 8 tournant, au cours de cette première phase, dans le sens contraire des aiguilles d'une montre autour de son axe), le disque 76 empêchant toute action du cliquet 74 dans cette phase. La fenêtre 77 autorise l'entraînement du tambour 70 pendant la première phase du mouvement du deuxième type (le levier 8 tournant dans le sens des aiguilles d'une montre).

Les deuxièmes phases des mouvements sont sans effet sur le tambour 70 du fait que les cliquets coopèrent avec les faces inclinées des dentures 72 ou 73.

Il convient de noter que le tambour 70 est muni d'une friction 79 (fig. 29) qui assure, par création d'un couple de frottement entre ce tambour 70 et l'axe fixe du levier 8, le maintien du tambour en position lors de la deuxième phase des mouvements du levier 8.

Sur les zones 80, 81, les dentures 72 et 73 ont été supprimées (fig. 30) pour assurer l'arrêt du chapeau 70 en position maximale de rotation correspondant à l'enroulement de la chaîne soit sur le plus grand pignon, soit sur le plus petit pignon.

Ainsi, à chaque mouvement du levier 8, qui correspond au passage de la chaîne d'un pignon au pignon immédiatement voisin, le chapeau 70 tourne, par rapport à une fenêtre fixe 82 (fig. 25) dans le sens convenable, d'un angle déterminé. Des graduations peuvent être prévues sur ce chapeau 70, de manière qu'un chiffre correspondant au pignon sur lequel la chaîne est enroulée apparaisse dans cette fenêtre 82.

Si le chapeau 70 est entraîné en rotation par une manipulation accidentelle, l'utilisation normale du levier 8 permet de synchroniser, à nouveau, la position du chapeau 70 et celle de la chaîne.

Selon une variante, le tambour 70 pourrait donner des indications de pente.

Le dispositif sélecteur de l'invention permet donc d'assurer une position précise à l'organe 4 à commander. En effet, cette position est déterminée par la coopération des crans de la pièce p... pd avec les moyens de verrouillage, et non pas par la position des moyens de commande 8.

Cette caractéristique est particulièrement avantageuse dans le cas d'un dérailleur de bicyclette, pour lequel il arrive fréquemment qu'on éprouve des difficultés à maintenir la chaîne sur un pignon intermédiaire, lorsque la position du guide de la chaîne est déterminée par la position du levier de commande 8. La précision de commande du dispositif sélecteur subsiste quel que soit le nombre de positions à commander.

La commande, selon l'invention, permet de passer pas à pas d'une position à la position immédiatement suivante sans risquer l'inconvénient de franchir involontairement cette position immédiatement suivante. Le dispositif de commande est compact et d'un poids réduit.

La précision de la commande de position de l'organe 4 subsiste même si le câble 11 se détend.

L'amplitude du déplacement de l'organe 4 n'est pas limitée par l'amplitude du déplacement du levier 8; en effet, il suffit de faire effectuer, par l'organe 4, le nombre de pas nécessaire pour obtenir l'amplitude de déplacement souhaitée.

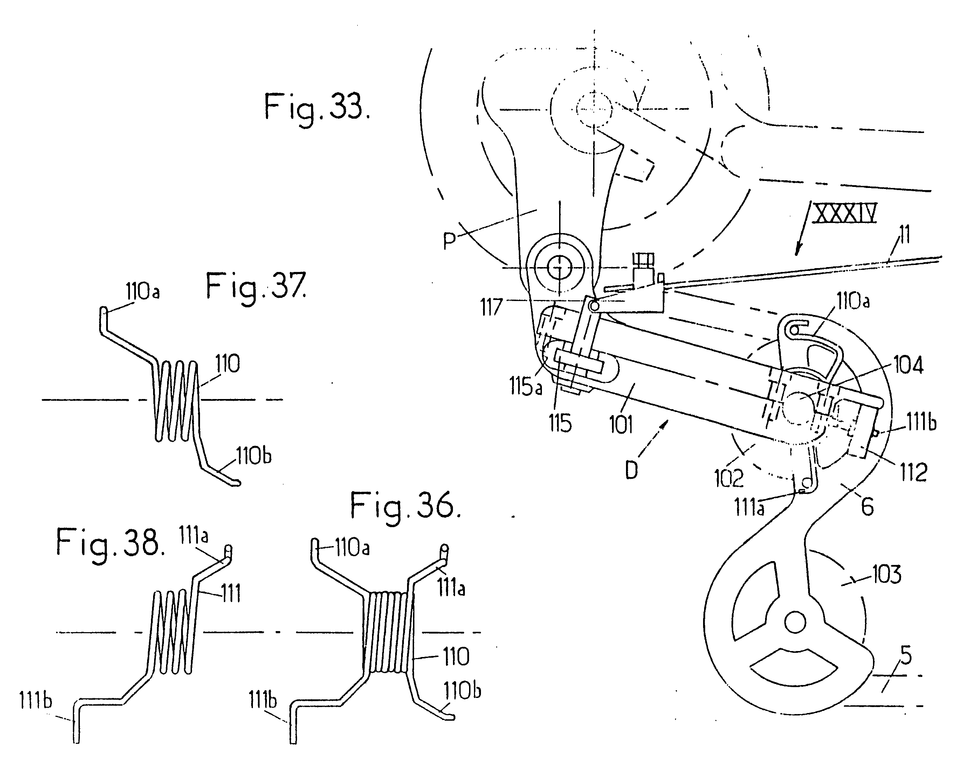

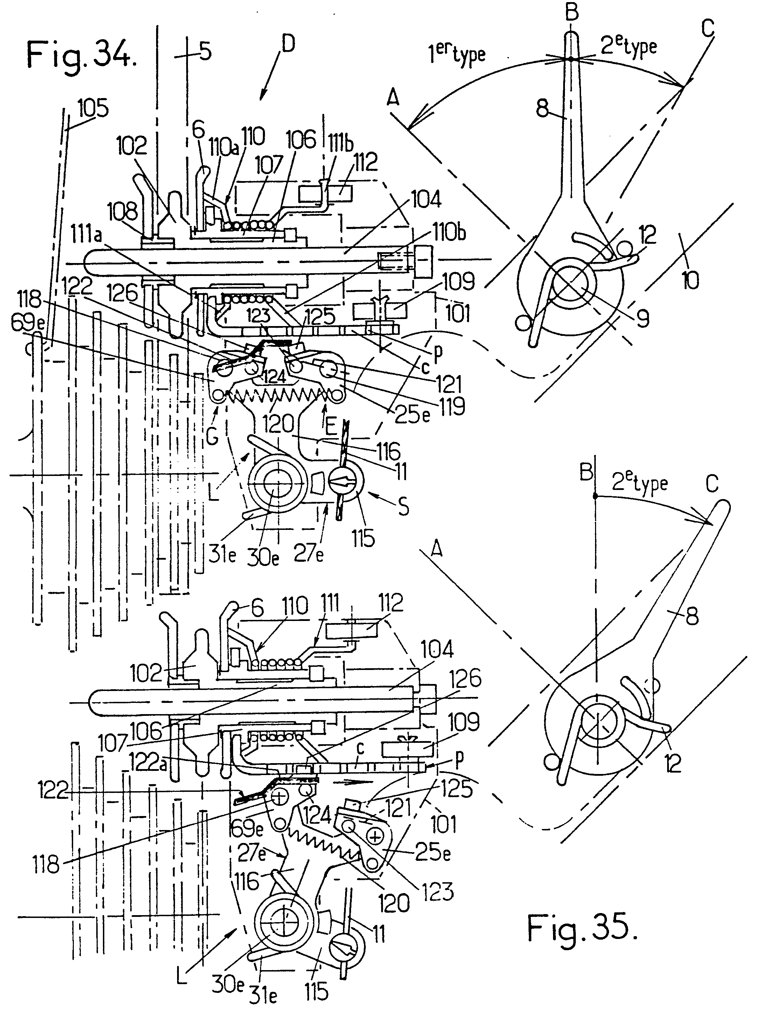

En se reportant aux dessins, et plus particulièrement aux fig. 33 à 35, on peut voir un autre mode de réalisation d'un dérailleur D pour pignons arrière de bicyclette équipé d'un dispositif sélecteur S. Ce sélecteur permet de commander, à distance, la position du guide-chaîne 6 relativement à un support formé par un boîtier 101 à structure creuse et constitué par deux demi-coquilles assemblées de manière démontable. Ce boîtier est monté sur une patte P (fig. 33) fixée au cadre de la bicyclette. La commande du guide-chaîne 6 est obtenue à partir du levier 8 (fig. 34 et 35) agissant sur une extrémité du câble de traction 11 dont l'autre extrémité est reliée au guide-chaîne 6 par l'intermédiaire des moyens de liaison L. Le levier 8 est monté sur le cadre 10 de la bicyclette, par exemple.

Le guide-chaîne 6 comporte deux galets rotatifs, à savoir un galet supérieur 102 et un galet inférieur 103 autour desquels s'enroule la chaîne 5.

L'ensemble du guide-chaîne 6 peut pivoter autour d'un axe transversal 104 sous l'action d'un couple de rappel élastique pour maintenir une tension de la chaîne lors des changements de pignons.

Selon ce mode de réalisation, le guide-chaîne 6 est monté coulissant sur l'axe transversal d'articulation 104 de manière telle que les frottements de coulissement soient réduits, et les moyens de déplacement E, G de la pièce p sont agencés pour s'écarter de cette pièce et la libérer complètement lorsqu'un changement de pignon est terminé, l'ensemble étant tel que le guide-chaîne 6 puisse s'autocentrer sur le pignon souhaité sous l'action de la chaîne 5 soumise à tension.

De préférence, l'arbre d'articulation 104 est coaxial au galet supérieur 102. L'extrémité de l'arbre 104 éloignée des rayons 105 (fig. 34) de la roue de bicyclette est fixée sur le boîtier 101, notamment par une vis; l'arbre 104 s'étend librement, à partir de cet ancrage, vers la roue de bicyclette.

Selon une première possibilité (fig. 34, 35 et 39), le montage coulissant du guide-chaîne 6 est assuré en prévoyant un manchon 106 solidaire du galet rotatif 102; ce manchon s'étend du côté du galet 102 opposé à la roue.

Le guide-chaîne 6 est lié en translation à une douille 107 montée autour du manchon 106, la douille 107 est elle-même liée en translation à ce manchon 106, mais est libre en rotation par rapport audit manchon.

Selon une variante, la douille 107 peut être solidaire du guide-chaîne et la pièce p est montée libre en rotation sur la douille. Le galet 102 est supporté libre en rotation, du côté de la roue, par une douille 108, montée sur le guide-chaîne.

La pièce p munie de crans est solidaire de la douille 107 et s'étend parallèlement à l'arbre 104 comme visible sur les fig. 2 et 3. La pièce p, à son extrémité éloignée du guide-chaîne 6, porte une roulette de guidage 109 qui coopère avec un chemin de guidage (non représenté) dans le boîtier 101.

Les moyens de rappel élastiques 110, 111, exerçant le couple de rappel qui maintient la tension de la chaîne, sont agencés de manière à ne produire aucune réaction transversale sensible, parasite au coulissement. Par réaction transversale, on désigne une réaction orthogonale à l'arbre 104 ou ayant une composante orthogonale à cet arbre.

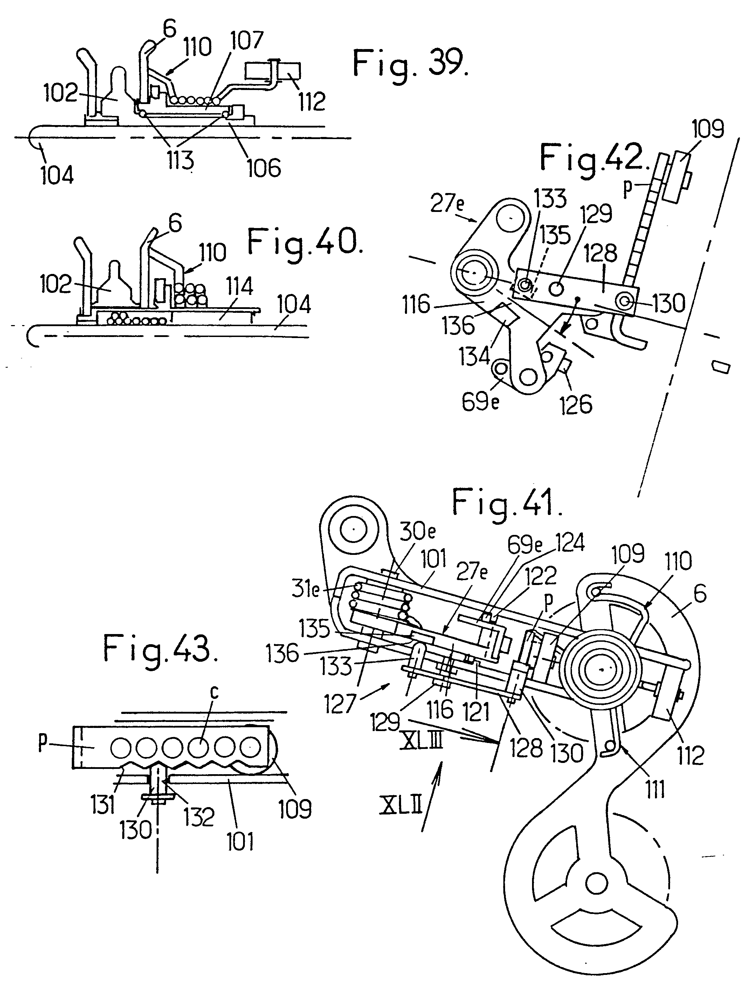

Pour cela, ces moyens de rappel sont constitués par deux ressorts, respectivement 110, 111 (voir fig. 36 à 38), à couple de rappel de même sens, mais à réactions transversales ou radiales opposées, de manière à s'annuler ou pratiquement s'annuler. Les deux ressorts 110, 111 sont vissés l'un dans l'autre, comme représenté sur la fig. 36. Le ressort 110 prend appui à une extrémité 110a contre le guide-chaîne et, à son autre extrémité 110b, sur la pièce p immobilisée en rotation par rapport au boîtier 101; le ressort 110 exerce ainsi un couple qui a tendance à faire tourner le guide-chaîne 6 autour de la douille 107 et de l'arbre 104.

Le ressort 111 prend appui à une extrémité 111a (fig. 33) sur le guide-chaîne 6 et, à son autre extrémité 111b (fig. 34) contre une partie du boîtier 101. Toutefois, pour réduire les frottements, du fait que le ressort 111 se déplace avec la douille 107, alors que le boîtier 101 est immobile en translation, l'extrémité 111b est munie d'une roulette 112 qui prend appui avec possibilité de roulement contre le boîtier 101.

Du fait que le galet 102 et le manchon 106 sont entraînés en rotation par la chaîne 5, les mouvements de coulissement transversal du manchon 106 et du galet 102 sont facilités et s'effectuent avec un frottement réduit. En outre, l'agencement des moyens de rappel élastiques 110, 111, permettant de supprimer ou de réduire considérablement toute réaction parasite au coulissement, contribue à la facilité des déplacements transversaux.

Il est à noter que cette facilité de coulissement est obtenue avec des moyens extrêmement simples selon la solution des fig. 34 et 35.

Selon une variante représentée sur la fig. 39, la liberté en rotation de la douille 107 par rapport au manchon 106 peut être assurée par une double couronne de billes 113 prévue aux deux extrémités axiales de la douille 107.

Selon une deuxième possibilité représentée sur la fig. 40, le coulissement à frottement réduit du guide-chaîne 6 sur l'arbre transversal 104 peut être assuré par l'intermédiaire d'une douille à billes 114, pour mouvements axiaux. Le galet 102 est alors monté libre en rotation, notamment par l'intermédiaire de billes, sur cette douille 114 qui se déplace essentiellement en coulissement par rapport à l'arbre 104, mais ne tourne pas par rapport à cet arbre.

Il est à noter que dans le cas de la solution de la fig. 40, l'existence d'une réaction transversale produite par les moyens de rappel élastiques du guide-chaîne 6 en rotation autour de l'arbre 104 est moins gênante que dans le cas des fig. 34, 35 et 39, du fait de la présence de la douille à billes 114. Une telle douille permet, en effet, des coulissements à frottement réduit, même en présence d'efforts non négligeables orientés orthogonalement à la direction de coulissement. Dans le cas de la fig. 40, un seul ressort de rappel, à réaction transversale non compensée, pourrait être éventuellement utilisé.

Les moyens de déplacement de la pièce p comprennent des premiers et des seconds moyens d'encliquetage E, G, propres à intervenir, respectivement, en réponse aux mouvements du premier et du second type.

Lorsqu'un changement de pignon est terminé, les moyens de déplacement E, G, sont totalement écartés de la pièce p, comme visible sur la fig. 34, de manière à libérer totalement cette dernière.

L'autocentrage du guide-chaîne 6, par l'action de la chaîne 5, sur le pignon souhaité, peut se réaliser du fait du coulissement à faible frottement du guide-chaîne 6 sur l'arbre 104 et de l'absence d'une liaison à effort parasite entre la pièce p et les moyens de déplacement E, G.

Comme visible sur la fig. 34, les premiers et seconds moyens d'encliquetage comprennent un bras coudé 27e articulé sur un axe 30e porté par le boîtier 101 ; ce bras 27e est commun aux premiers et seconds moyens d'encliquetage. Une branche 115 du bras 27e traverse une ouverture 115a (fig. 33) prévue dans le boîtier 101 pour faire saillie vers l'extérieur; cette branche 115 est reliée à l'extrémité du câble 11, de préférence par l'intermédiaire d'un système à palonnier 117 (fig. 33), avec possibilité de réglage du point d'attache du câble 11.

Comme visible sur les fig. 34 et 35, le bras 27e est soumis à l'action de rappel, dans le sens des aiguilles d'une montre autour de l'axe 30e, d'un ressort de torsion 31e.

Le bras 27e comporte une autre branche 116, située à l'intérieur du boîtier 101 et sensiblement orthogonale à la branche 115. La branche 116, dont l'extrémité voisine de la pièce p est élargie et comporte deux extensions longitudinales, comme on peut le voir sur les fig. 34 et 35, est munie de deux cliquets respectivement 25e et 69e destinés à travailler en sens contraires. Ces cliquets, de forme coudée, comme on peut le voir sur les fig. 34 et 35, sont articulés, dans la zone de leur coude, respectivement sur un axe 118, 119, porté par la branche 116.

Les extrémités des cliquets 25e, 69e éloignées de la pièce p sont reliées par des moyens d'interaction formés par un ressort de traction 120.

A chaque cliquet 25e, 69e est associée une came munie d'une rampe 121, 122 partiellement représentée sur les fig. 34 et 35, propre à coopérer avec un pion 123, 124, solidaire du cliquet correspondant.

Les pions 123, 124 sont maintenus en appui contre les rampes 121, 122 par l'action de rappel du ressort de traction 120.

La forme des rampes 121, 122 est déterminée de manière telle que, lors de la rotation du bras 27e autour de l'axe 30e dans un sens déterminé, la rampe de la came, associée au cliquet destiné à intervenir selon le sens de rotation du bras 30e, assure le guidage de ce cliquet jusqu'à ce qu'il vienne coopérer avec le cran c correspondant de la pièce p pour entraîner cette dernière.

Les rampes 121, 122 sont prévues respectivement au-dessous et au-dessus du plan du bras 27e. Ces rampes sont avantageusement formées par des saillies transversales vers l'intérieur du boîtier 101, comme on peut le voir sur la fig. 41, venues directement de moulage.

Les crans c de la pièce p sont avantageusement constitués par des trous circulaires (fig. 43) dans lesquels sont propres à venir s'engager, lors d'un mouvement du bras 27e, les extrémités des cliquets 25e, 69e, formées, respectivement, par des ergots 125, 126.

Le fonctionnement du dispositif est le suivant:

Ce fonctionnement sera expliqué essentiellement avec référence aux fig. 34 et 35, la fig. 35 illustrant la première phase d'un mouvement du deuxième type.

Sur la fig. 34, le levier 8 est représenté en position moyenne ou position de repos, et la chaîne 5 est enroulée autour de l'avant-dernier pignon (dans le sens des diamètres décroissants).

Le guide-chaîne 6 se centre automatiquement sur ce pignon, sous l'action de la chaîne 5, en raison du faible frottement de coulissement du manchon 106 sur l'arbre 104 et en l'absence de toute liaison entre la pièce p et les moyens de déplacement E, G qui sont écartés de cette pièce pour la position de repos.

Si l'on souhaite faire passer la chaîne 5 de l'avant-dernier pignon sur le plus petit pignon, on fait effectuer au levier 8 le mouvement du deuxième type; pour cela, on pousse le levier 8 vers la position C (fig. 35) à l'encontre du ressort de rappel 12. Le câble 11 se trouve détendu et le ressort 31e fait tourner le bras 27e dans le sens des aiguilles d'une montre, selon la représentation de la fig. 35, autour de l'axe 30e. Au cours de cette rotation du bras 27e, le cliquet 69e se rapproche de la pièce p; en outre, le pion 124 de ce cliquet 69e, par coopération avec la rampe 122, sous l'action du ressort de rappel 120, détermine la position angulaire du cliquet 69e.

Pour une rotation suffisante du bras 27e, comme représenté sur la fig. 35, l'ergot 126 du cliquet 69e s'est introduit dans un cran c de la pièce p. Lors de la poursuite du mouvement de rotation du bras 27e, l'ergot 126 entraîne la pièce p dans le sens souhaité, c'est-à-dire vers la droite dans le cas de la représentation de la fig. 35. Il est à noter que la partie 122a de la rampe qui coopère, alors, avec le pion 124, est parallèle à la pièce p. Il en est de même pour l'autre rampe 121.

Lors de la deuxième phase de ce mouvement du deuxième type, c'est-à-dire lors du retour du levier 8 de la position C à la position B, le cliquet 69e, ne travaillant plus dans le sens de l'arc-boutement, va tourner autour de l'axe 118 et se dégager du cran c, laissant la pièce p et le guide-chaîne 6 dans la position correspondant à l'enroulement de la chaîne autour du pignon de plus petit diamètre.

Pour le passage d'un pignon de plus grand diamètre, au pignon immédiatement inférieur (cas du mouvement du deuxième type), il n'est pas utile que la position de la pièce p, à la fin de la première phase, ait dépassé la position correspondant au centrage correct sur le pignon immédiatement inférieur.

Par contre, lors du passage d'un pignon inférieur au pignon immédiatement supérieur, il est utile, pour faciliter la montée de la chaîne sur le pignon supérieur, de dépasser, à la fin de la première phase du mouvement du premier type, la position de la pièce p correspondant au centrage correct sur le pignon supérieur.

Le dépassement correspond, avantageusement, à un demi-pas.

Cela signifie que, lorsque l'on fait passer la chaîne d'un pignon au pignon immédiatement supérieur, à la fin de la première phase du mouvement du premier type, c'est-à-dire lorsque le levier 8 se trouve dans la position A, l'ergot 125 du cliquet 25e, engagé dans un cran c de la pièce p, aura poussé cette dernière au-delà de la position de centrage exact; le guide-chaîne 6 aura donc un plan moyen décalé sensiblement d'un demi-pas vers le plan vertical moyen de la roue, par rapport au plan du pignon sur lequel on souhaite faire passer la chaîne.

Lors de la deuxième phase du mouvement du premier type, le guide-chaîne 6, sous l'action de la chaîne 5, effectuera un mouvement d'autocentrage et se déplacera sensiblement d'un demi-pas vers l'extérieur par rapport au plan vertical moyen de la roue.

Il est à noter que lors du mouvement du premier type, le ressort 12 n'intervient pas pour s'opposer à la première phase du mouvement du levier 8.

L'explication détaillée du passage d'un pignon inférieur au pignon immédiatement supérieur, lors du mouvement du premier type n'a pas été donnée en détail, car elle se déduit immédiatement de l'explication donnée pour le passage d'un pignon supérieur au pignon immédiatement inférieur. Le bras 27e au lieu de tourner dans le sens représenté sur la fig. 35, lors de la première phase, tourne dans le sens contraire sous l'effet de la traction exercée sur le câble 11.

C'est le cliquet 25e qui assure le déplacement de la pièce p vers la gauche selon la représentation de la fig. 34.

Dans la pratique, il est apparu que l'autocentrage exercé par la chaîne 5 est très satisfaisant et que la réduction des frottements parasites pour les coulissements transversaux conduit à une commande très douce.

Toutefois, si l'on souhaite éviter tout risque d'un coulissement trop important du manchon 106, sous l'effet de sollicitations transversales telles que chocs, etc., pouvant conduire à des craquements de la chaîne 5, alors que le levier 8 n'est pas actionné et qu'aucun changement de pignon n'est commandé, on peut prévoir des moyens de verrouillage supplémentaires 127 (fig. 41 à 43) de la pièce p dans une position correspondant à un pignon déterminé.

Ces moyens de verrouillage 127 comprennent une lame 128 rigide dont la direction longitudinale est sensiblement orthogonale à celle de la pièce p. Cette lame est montée au-dessous du boîtier 101 (fig. 41) sur une vis 129 bloquée sur le boîtier. La vis 129 traverse un trou prévu dans la lame 128; un jeu suffisant est prévu entre le diamètre du trou de la lame 128 et celui de la vis 129, de manière à permettre un basculement de la lame 128 autour d'un axe horizontal transversal coupant l'axe de la vis 129.

La partie de la lame 128 située, par rapport à la vis 129, du côté de la pièce p (partie droite de la lame 128 selon la représentation de la fig. 41) est plus longue et a une masse supérieure à celle de la partie située de l'autre côté.

La lame 128 porte à son extrémité située du côté de la pièce p un doigt 130 propre à coopérer avec des encoches 131 (fig. 43) en forme de dents de scie, prévues sur la tranche inférieure de la pièce p. L'extrémité supérieure du doigt 130 coopérant avec ces encoches a la forme d'un dièdre correspondant à celui des encoches (voir fig. 43). Le doigt 130 traverse une ouverture 132 prévue dans la paroi inférieure du boîtier 101. La coopération du doigt 130 et de cette ouverture 132 immobilise en rotation la lame 128 par rapport au boîtier 101.

La lame ou pièce 128 comporte, à son autre extrémité, un pion 133 à bout arrondi, propre à coopérer et à s'appuyer sur la surface inférieure de la branche 116 du bras 25e, en traversant la paroi du boîtier.

La surface inférieure de cette partie 116 comporte deux évidements 134, 135 (fig. 42) prévus au voisinage des bords latéraux, séparés l'un de l'autre par la zone centrale 136.

Ces évidements 134 et 135 sont disposés de manière telle et ont une profondeur telle que lorsque le bras 27e a tourné dans un sens ou dans l'autre et se trouve vers la fin de la première phase d'un mouvement du premier ou du deuxième type, le pion 133 arrive en face de ces évidements.

Du fait que la masse du doigt 130 et de la lame 128 située de l'autre côté de la vis 129 est supérieure à celle du pion 133 et de l'autre partie de la lame 128, cette lame va basculer, en tournant suivant le sens des aiguilles d'une montre (selon la représentation de la fig. 41), autour d'un axe horizontal perpendiculaire au plan de la fig. 41, de telle sorte que le pion 133 vienne en contact avec le fond de l'évidement 134 ou 135 (fig. 42). Le doigt 130 est alors dégagé complètement des encoches 131.

Par contre, lorsque le bras 27e occupe sensiblement sa position moyenne, le pion 133 coopère avec la zone centrale 136 et le doigt 130 est engagé dans une encoche 131 (fig. 41 et 43).

Le fonctionnement des moyens de verrouillage des fig. 41 à 43 est le suivant:

Lorsque le levier 8 est dans la position moyenne, c'est-à-dire la position correspondant à l'enroulement de la chaîne 5 sur un pignon déterminé, le doigt 130 est engagé dans l'encoche 131 correspondant au pignon en question. Ce doigt 130 est maintenu dans cette encoche du fait que le pion 133 coopère avec la zone 136, comme expliqué précédemment.

Le doigt 130 empêche donc la pièce p et le guide-chaîne 6 de se déplacer da manière sensible sous l'action d'une sollicitation transversale parasite telle qu'un choc.

Il convient de noter toutefois qu'un jeu suffisant peut être prévu, par exemple, entre l'extrémité du doigt 130 et les parois de l'encoche 131 correspondante, pour laisser au guide-chaîne 6 la possibilité d'un débattement relativement faible, suivant le sens transversal, afin d'autoriser l'autocentrage évoqué précédemment.

Lorsque le levier 8 est actionné, le bras 27e tourne dans un sens ou dans l'autre autour de l'axe 30e; il en résulte qu'un évidement 134, 135 arrive au droit du pion 133. La lame 128 bascule sous l'action de la pesanteur et le doigt 133 pénètre dans l'évidement en question. Le doigt 130 est dégagé de l'encoche 131 et la pièce p peut être déplacée.

L'ensemble est agencé de manière que le doigt 130 ait libéré la pièce p au moment où l'un des cliquets, par son ergot 125 ou 126, commence à entraîner cette pièce p en translation.

Le fait que le doigt 130 se trouve totalement dégagé des encoches 131, lors d'un changement de pignon, permet de dépasser, lors du changement, la position de ce pignon sans risque de voir le doigt 130 s'engager dans une encoche qui ne correspond pas au pignon souhaité.

Cela est particulièrement intéressant lors du passage de la chaîne d'un pignon inférieur au pignon immédiatement supérieur.

En effet, comme expliqué précédemment, ce passage qui correspond à un mouvement du premier type, est facilité lorsque, à la fin de la première phase du mouvement du premier type, le guide-chaîne 6 et le galet 102 ont été déplacés d'un demi-pas au-delà de la position exacte correspondant à celle du pignon souhaité.

Si le doigt 130 restait en coopération avec les encoches 131, à la fin d'un tel dépassement, le doigt 130 se trouverait au sommet de la crête séparant deux encoches 131.

Il y aurait alors le risque (par suite de vibrations, d'effort transversal parasite, d'usure ou de défaut de précision ou toute autre cause) d'un passage de l'extrémité du doigt 130 de l'autre côté de cette crête, de telle sorte que le doigt s'engagerait dans une encoche 131 qui ne correspondrait pas au pignon souhaité.

Avec les moyens de verrouillage prévus aux fig. 41 à 43, un tel risque est totalement éliminé puisque le doigt 130 ne viendra coopérer avec l'encoche 131 qu'au cours de la deuxième phase du mouvement du premier type, c'est-à-dire lorsque la pièce p aura effectué son mouvement de retour d'environ un demi-pas vers la position correspondant exactement au pignon souhaité.

Le mode de réalisation des fig. 33 à 43 permet d'obtenir un dérailleur au fonctionnement particulièrement doux. La construction de ce dérailleur est simplifiée et conduit à un ensemble dont la masse est réduite.

L'autocentrage du guide-chaîne sur le pignon souhaité permet un fonctionnement de la chaîne dans de bonnes conditions.

Le prix de revient est réduit du fait de la construction simplifiée.

Le dispositif sélecteur convient aussi bien à un dérailleur avant qu'à un dérailleur arrière.

Le levier de commande 8 peut être situé à tout endroit approprié de la bicyclette, par exemple sur le guidon.

Ce levier peut être remplacé par un autre moyen de commande équivalent.

Il est clair que des variantes de réalisation sont possibles pour les moyens décrits. Par exemple, le basculement de la lame 128 des moyens de verrouillage peut être assuré par l'action d'un ressort au lieu de la pesanteur.

Les efforts mécaniques sur les pièces en action sont réduits lorsqu'il n'y a pas de ressort de rappel du guide-chaîne pour le mouvement de déplacement transversal.

## Revendications

1. Dispositif sélecteur pour la commande à distance de la position d'un organe (4, 6), relativement à un support (3, 101), par un moyen de commande (8) agissant à une extrémité d'un lien souple (11) de traction, notamment un câble, dont l'autre extrémité est reliée audit organe (4, 6) par des moyens de liaison comprenant une pièce (p) munie de crans (c) dont le nombre est au moins égal au nombre de positions à donner audit organe (4, 6), ladite pièce (p) étant reliée à l'un des deux éléments formés par l'organe (4, 6) ou le support (3, 101), caractérisé par le fait qu'il comprend:

— des premiers moyens de déplacement (E; 25e) propres à coopérer avec ladite pièce (p) en réponse à un mouvement d'un premier type du moyen de commande (8), ces premiers moyens de déplacement (E; 25e) permettant un déplacement relatif cran par cran entre le support (3, 101) et l'organe (4, 6), et

— des seconds moyens de déplacement (G; 69e) propres à coopérer avec la pièce (p) en réponse à un mouvement d'un deuxième type de l'élément de commande (8), ces seconds moyens (G; 69e) permettant un déplacement relatif cran par cran entre le support (3, 101) et l'organe (4, 6) dans un deuxième sens opposé au premier,

l'ensemble étant agencé de manière que le mouvement du premier type du moyen de commande (8) correspond à un déplacement de ce moyen (8) depuis une position moyenne (B) jusqu'à une première position extrême (A) (première phase), suivi d'un retour à la position moyenne (B) (seconde phase), tandis que le mouvement du deuxième type correspond à un déplacement de ce moyen de commande (8) depuis la position moyenne (B) jusqu'à une seconde position extrême (C) (première phase),

suivi d'un retour à la position moyenne (B) (deuxième phase).

2. Dispositif selon la revendication 1, caractérisé par le fait que les premiers et seconds moyens de déplacement sont formés respectivement par des premiers (E; 25e) et seconds (G; 69e) moyens d'encliquetage.

3. Dispositif selon l'une des revendications 1 ou 2, caractérisé par le fait qu'il comprend des moyens de verrouillage (V; 127) prévus pour maintenir la pièce (p) en position.

4. Dispositif selon l'une quelconque des revendications précédentes, caractérisé par le fait que la pièce (p) est solidaire en translation dudit organe (4, 6).

5. Dispositif selon l'ensemble des revendications 2 et 3, dans lequel des moyens élastiques de rappel sont prévus pour engendrer un effort de rappel entre la pièce (p) et le support (3), caractérisé par le fait que les seconds moyens d'encliquetage (G) sont agencés pour dégager les moyens de verrouillage (V) — comprenant un verrou (17) — de la pièce (p, pa, pb, pc) et pour laisser cette pièce se déplacer d'un cran (c) seulement sous l'action de l'effort de rappel élastique.

6. Dispositif selon la revendication 5, caractérisé par le fait que les premiers moyens d'encliquetage (E) comprennent un cliquet (25) propre à venir en butée dans le fond d'un cran (c) de la pièce (p, pa, pb, pc) et à entraîner cette pièce lors de la première phase du mouvement du premier type, de manière à provoquer le passage du verrou (17) dans le cran suivant.

7. Dispositif selon la revendication 6, caractérisé par le fait que le cliquet (25) est porté par l'extrémité d'un bras (27, 27b, 27c) articulé sur un axe (30, h, 30c) porté par le support (3), l'extrémité du lien souple (11) étant accrochée à ce bras et un effort de rappel élastique étant exercé sur ledit bras de manière à maintenir sous tension le lien souple, l'ensemble étant tel que le mouvement du premier type correspond à un déplacement du moyen de commande qui commence par une traction sur le lien souple (première phase), puis par un relâchement du lien souple (deuxième phase) pour le retour du moyen de commande à sa position moyenne (B).

8. Dispositif selon la revendication 5, caractérisé par le fait que les seconds moyens d'encliquetage (G) sont agencés de manière que, lors de la première phase du mouvement du deuxième type, le verrou (17) soit dégagé de la face (19) du cran contre laquelle il était en butée, de telle sorte que la pièce (p, pa, pb, pc) se déplace sous l'action de l'effort de rappel élastique, ces seconds moyens d'encliquetage comprenant des moyens de butée (36, 37) propres à retenir la pièce lorsqu'elle a parcouru sensiblement un demi-cran, ces seconds moyens d'encliquetage assurant, lors de la deuxième phase du mouvement du deuxième type, le retour du verrou dans le cran suivant, les moyens de butée (36, 37) libérant la pièce.

9. Dispositif selon la revendication 5, caractérisé par le fait que les seconds moyens d'encliquetage (G) comprennent un bras (34, 34b), notamment coudé, articulé sur un pivot (35) porté par le verrou (17), ce bras comportant une tête (36), notamment arrondie, munie d'un bec (37) propre à pénétrer dans un cran voisin de celui coopérant avec le verrou, des moyens d'interaction (39, 39b) étant prévus entre ce bras et les premiers moyens d'encliquetage, de telle sorte que les mouvements des premiers moyens d'encliquetage (E) provoquent une rotation de ce bras (34, 34b), l'ensemble étant tel que, lors de la première phase du mouvement du deuxième type, la rotation dudit bras (34, 34b) autour du pivot (35) porté par le verrou et la coopération de la tête (36) avec la surface d'un cran provoquent la sortie du verrou, le bec (37) de la tête constituant les moyens de butée propres à retenir la pièce en fin de première phase de ce mouvement du deuxième type, tandis que lors de la seconde phase de ce mouvement du deuxième type, le bras (34, 34b) reprend la position qui permet le retour du verrou dans le cran suivant.

10. Dispositif selon la revendication 5, caractérisé par le fait que le verrou (17, 22c) peut être dégagé d'un cran de la pièce par un déplacement dans un plan perpendiculaire à la direction de succession des crans de la pièce.

11. Dispositif selon la revendication 2, caractérisé par le fait que les premiers moyens d'encliquetage (E) comprennent un bras articulé (27d) muni d'un cliquet (25d), l'extrémité du câble (11) étant accrochée à ce bras, et par le fait que les seconds moyens d'encliquetage (G) comprennent également un bras (67) articulé muni d'un cliquet (69) destiné à travailler en sens contraire de l'autre cliquet (25d), ces deux bras étant reliés par une biellette (39d) formant des moyens d'interaction.

12. Dispositif selon la revendication 1 pour la commande du passage d'une chaîne d'entraînement, d'un pignon à un pignon de diamètre différent, caractérisé par le fait que les premiers moyens de déplacement (E) commandent le déplacement de la pièce (p) munie de crans dans le sens qui correspond au passage de la chaîne d'un pignon inférieur au pignon immédiatement supérieur, et par le fait que ces premiers moyens de déplacement (E) sont agencés de manière que, à la fin de la première phase du mouvement du premier type, la chaîne occupe une position au-delà de la position normale, correspondant notamment à environ un demi-cran de la pièce, le retour de la chaîne à une position correspondant à celle du pignon étant obtenu lors de la deuxième phase du mouvement du premier type.

13. Dispositif selon l'une quelconque des revendications précédentes, appliqué à un dérailleur de bicyclette, dans lequel le susdit organe est formé par, ou est relié à, un guide (6, 6a) de la chaîne (5) de la bicyclette, tandis que le moyen de commande est constitué par le levier (8) habituel de commande du dérailleur, des moyens d'affichage (70) de la position du susdit organe (4) étant prévus au niveau des moyens de commande (8), caractérisé par le fait que les moyens d'affichage comprennent un tambour rotatif gradué (70) monté sur l'axe (9) du levier (8), ce tambour comportant, du côté du levier, une piste (71) munie de deux dentures inversées (72, 73), la base circulaire du levier (8) comportant des premiers et des seconds moyens d'entraînement (74, 75, 76, 77, 78) propres à faire entraîner le tambour (70) par le levier uniquement pendant la première phase d'un mouvement du premier type ou du deuxième type, le tambour (70) restant immobile lors de la deuxième phase de ces mouvements.

14. Dispositif sélecteur, selon l'une des revendications 1 ou 2 pour dérailleur de bicyclette, permettant de commander à distance la position de l'organe consistant en un guide-chaîne (6), relativement au support (101), par le moyen de commande (8) consistant en un levier agissant à une extrémité du câble de traction, dont l'autre extrémité est reliée au guide-chaîne, par l'intermédiaire de moyens de liaison, l'ensemble du guide-chaîne pouvant pivoter autour d'un axe d'articulation sous l'action d'un couple de rappel élastique pour maintenir une tension de la chaîne lors des changements de pignon, la pièce (p) étant solidaire en translation du guide-chaîne (6), caractérisé par le fait que le guide-chaîne (6) est monté coulissant sur un arbre transversal (104) et que les moyens de déplacement (E, G) de la pièce (p) sont agencés pour s'écarter de cette pièce et la libérer complètement lorsqu'un changement de pignons est terminé.

15. Dispositif sélecteur selon la revendication 14, caractérisé par le fait que l'arbre transversal, sur lequel le guide-chaîne (6) est monté coulissant, est constitué par l'axe d'articulation (104) du guide-chaîne.

16. Dispositif sélecteur selon la revendication 15 pour dérailleur dont le guide-chaîne comporte deux galets rotatifs autour desquels s'enroule la chaîne, caractérisé par le fait que l'axe d'articulation (104) du guide-chaîne (6) est coaxial au galet supérieur (102) du guide-chaîne.

17. Dispositif sélecteur selon la revendication 16, caractérisé par le fait que le guide-chaîne (6) est monté coulissant, avec frottement de coulissement réduit, en prévoyant un manchon (106) solidaire du galet rotatif (102), l'ensemble du manchon et du galet pouvant tourner et coulisser par rapport à l'arbre transversal (104), le guide-chaîne se déplaçant avec le galet dans son mouvement de translation, les moyens de rappel élastiques (110, 111), exerçant le couple de rappel qui maintient la tension de la chaîne, étant agencés de manière à ne produire aucune réaction transversale sensible parasite au coulissement.

18. Dispositif sélecteur selon la revendication 17, caractérisé par le fait que les moyens de rappel élastiques à réaction transversale nulle ou sensiblement nulle sont constitués par deux ressorts (110, 111) à couple de rappel de même sens, mais à effet transversal ou radial opposé.

19. Dispositif sélecteur selon la revendication 14, caractérisé par le fait que les premiers et seconds moyens de déplacement (E, G) comprennent un bras articulé (27e) commun, muni de deux cliquets (25e, 69e) destinés à travailler en sens contraires et reliés par des moyens d'interaction notamment formés par un ressort (120), l'extrémité du câble de commande (11) étant accrochée au susdit bras.

20. Dispositif sélecteur selon la revendication 19, caractérisé par le fait qu'il comporte, pour chaque cliquet (25e, 69e), une came munie d'une rampe (121, 122) coopérant avec un pion (123, 124) solidaire du cliquet et déterminant la position angulaire de ce cliquet sous l'effet d'un rappel élastique, l'ensemble étant tel que lors de la rotation du bras portant le cliquet, dans un sens déterminé, la rampe de la came assure le guidage du cliquet jusqu'à ce que son ergot (125, 126) entre dans le cran (c) correspondant de la pièce (p) pour entraîner cette dernière.

21. Dispositif sélecteur selon la revendication 20, caractérisé par le fait qu'il comprend des moyens de verrouillage de la pièce et du guide-chaîne formés par une lame (128) portant à une extrémité un doigt (130) propre à coopérer avec des encoches (131) prévues sur la pièce (p) et, à son autre extrémité, un pion (133) propre à coopérer avec un bras (27e) portant les cliquets, la lame étant montée de manière à pouvoir basculer et à permettre au doigt de sortir d'une encoche (131), lorsque le bras (27e) a été écarté de sa position de repos, tandis que la coopération du pion (133) avec le bras (27e), lorsque ce dernier reprend sa position de repos, provoque l'introduction du doigt (130) dans l'encoche appropriée.

## Claims

1. Selector device for the remote control of the position of a member (4, 6) relative to a support (3, 101) by a control means (8) acting at one end of a flexible tractive coupling (11), particularly a cable, whose other end is connected to the member (4, 6) by connecting means comprising a part (p) provided with notches (c), whose number is at least equal to the number of positions to be given to member (4, 6), said part (p) being connected to one of the two elements formed by member (4, 6) or support (3, 101), characterized in that it comprises:

- first displacement means (E; 25e) for cooperating with part (p) in response to a movement of a first type of the control means (8), said first displacement means (E; 25e) permitting a relative displacement notch by notch between supports (3, 101) and member (4, 6), and
- second displacement means (G; 69e) for cooperating with part (p) in response to a movement of a second type of control means (8), said second means (G; 69e) permitting a relative displacement notch by notch between support (3, 101) and member (4, 6) in a second direction which is opposite to the first, the arrangement being such that the movement of the first type of control means (8) corresponds to a displacement of said means (8) from a mean position(B) up to a first end position (A) (first phase) followed by a return to the mean position (B) (second phase) whilst the movement of the second type corresponds to a displacement of the control means (8) from the mean position (B) to a second end position (C) (first phase) followed by a return to the mean position (B) (second phase).

2. Device according to claim 1, characterized in that the first and second displacement means are respectively formed by first (E; 25e) and second (G; 69e) ratchet means.

3. Device according to claim 1 or 2, characterized in that it comprises locking means (V; 127) for maintaining part (p) in position.

4. Device according to any one of the preceding claims, characterized in that the part (p) is integral in translation with member (4, 6).

5. Device according to claims 2 and 3 in which resilient return means are provided for producing a return force between part (p) and support (3), characterized in that the second ratchet means (G) are arranged to free the locking means (V), comprising a bolt (17), from part (p, pa, pb, pc) and allow said part to move by one notch (c) only under the action of the resilient return force.

6. Device according to claim 5, characterized in that the first ratchet means (E) comprise a pawl (25) which can abut against the bottom of a notch (c) of part (p, pa, pb, pc) and can drive said part during the first phase of the movement of the first type, in such a way as to bring about the passage of the bolt (17) into the following notch.

7. Device according to claim 6, characterized in that the pawl (25) is carried by the end of an arm (27, 27b, 27c) articulated to a spindle (30, h, 30c) carried by support (3), the end of the flexible coupling (11) being attached to said arm and a resilient return force being exerted on the arm so as to maintain the flexible coupling under tension, the arrangement being such that the movement of the first type corresponds to a displacement of the control means starting by a pull on the flexible coupling (first phase), then a slackening of the flexible coupling (second phase) for the return of the control means to its mean position (B).

8. Device according to claim 5, characterized in that the second ratchet means (G) are arranged in such a way that, during the first phase of the movement of the second type, bolt (17) is freed from the face (19) of the notch against which it was in abutment, in such a way that part (p, pa, pb, pc) is displaced under the action of the resilient return force, said second ratchet means comprising stop means (36, 37) able to retain the part when it has travelled substantially a half-notch, said second ratchet means ensuring, during the second phase of the movement of the second type, the return of the bolt to the following notch, the stop means (36, 37) releasing the part.

9. Device according to claim 5, characterized in that the second ratchet means (G) comprise an arm (34, 34b), particularly a bent arm, articulated to a pivot (35) carried by bolt (17), said arm comprising a head (36), particularly a rounded head, provided with a nose (37) which can penetrate a notch adjacent to that cooperating with the bolt, interaction means (39, 39b) being provided between the arm and the first ratchet means, in such a way that the movements of the first ratchet means (E) bring about a rotation of arm (34, 34b), the arrangement being such that, during the first phase of the movement of the second type, the rotation of arm (34, 34b) about pivot (35) carried by the bolt and the cooperation of head (36) with the surface of a notch cause the exit of the bolt, nose (37) of the head constituting stop means able to retain the part at the end of the first phase of said movement of the second type whilst, during the second phase of this movement of the second type, arm (34, 34b) reassumes the position permitting the return of the bolt into the following notch.

10. Device according to claim 5, characterized in that the bolt (17, 22c) can be freed from a notch of the part by a displacement in a plane perpendicular to the direction in which the notches in the part follow one another.

11. Device according to claim 2, characterized in that the first ratchet means (E) comprise an articulated arm (27d) provided with a pawl (25d), the end of cable (11) being attached to said arm, and that the second ratchet means (G) also comprise an articulated arm (67) provided with a pawl (69) for working in the opposite direction to the other pawl (25d), said two arms being connected by a link (39d) forming interaction means.

12. Device according to claim 1 for controlling the passage of a drive chain from one sprocket to a sprocket of a different diameter, characterized in that the first displacement means (E) control the displacement of part (p) provided with notches in the direction corresponding to the passage of the chain from a lower sprocket to the immediately higher sprocket, and that said first displacement means (E) are arranged in such a way that, at the end of the first phase of movement of the first type, the chain occupies a position beyond the normal position, corresponding more particularly to approximately a half-notch of the part, the return of the chain to a position corresponding to that of the pinion being obtained during the second phase of the movement of the first type.

13. Device according to any one of the preceding claims applied to a bicycle derailleur in which the said member is formed by or is connected to a guide (6, 6a) of the chain (5) of a bicycle, whilst the control means is constituted by the conventional control lever (8) of the derailleur, means (70) for displaying the position of the member (4) being provided at the control means (8), characterized in that the display means comprise a rotary graduated drum (70) mounted on the spindle (9) of lever (8), said drum comprising on the lever side a track (71) provided with two sets of inverted teeth (72, 73), the circular base of the lever (8) comprising first and second drive means (74, 75, 76, 77, 78) for driving drum (70) by means of the lever only during the first phase of a movement of the first type or of the second type, the drum (70) remaining motionless during the second phase of these movements.

14. Selector device according to claim 1 or 2 for a bicycle derailleur permitting the remote control of the position of the member consisting of a guide chain (6) relative to the support (101) by the control means (8) comprising a lever acting on one end of the tractive cable, whose other end is connected to the chain guide by means of connecting means, the chain guide assembly being pivotable about a pivot pin under the action of a resilient return torque for maintaining a chain tension during sprocket changes, part (p) being locked in translation with the chain guide (6), characterized in that the chain guide (6) is slidingly mounted on a transverse shaft (104), and that the displacement means (E, G) of part (p) are arranged to move away from said part and free it completely when a sprocket change is completed.

15. Selector device according to claim 14, characterized in that the transverse shaft on which the chain guide (6) is slidingly mounted comprises the pivot pin (104) of the chain guide.

16. Selector device according to claim 15 for a derailleur, whose chain guide comprises two rotary rollers about which the chain passes, characterized in that the pivot pin (104) of the chain guide (6) is coaxial to the upper roller (102) of the chain guide.

17. Selector device according to claim 16, characterized in that the chain guide (6) is slidingly mounted with reduced sliding friction, by providing a sleeve (106) integral with the rotary roller (102), the assembly of the sleeve and the roller being able to rotate and slide with respect to the transverse shaft (104), the chain guide moving with the roller in its translation movement, the resilient return means (110, 111) exerting the return torque maintaining the tension in the chain being arranged so as to produce no substantial transverse reaction interfering with the sliding.

18. Selector device according to claim 17, characterized in that the resilient return means with a zero or substantially zero transverse reaction are formed by two springs (110, 111) with a return torque in the same direction, but with an opposite transverse or radial effect.

19. Selector device according to claim 14, characterized in that the first and second displacement means (E, G) comprise a common articulated arm (27e) provided with two pawls (25e, 69e) able to work in opposite directions and connected by interaction means, particularly formed by a spring (120), the end of the control cable (11) being attached to the said arm.

20. Selector device according to claim 19, characterized in that it comprises for each pawl (25e, 69e) a cam having a ramp (121, 122) cooperating with a stud (123, 124) integral with the pawl and determining the angular position of said pawl under the effect of the resilient return force, the arrangement being such that, during the rotation of the arm carrying the pawl in a given direction, the camp ramp guides the pawl until its lug (125, 126) enters the corresponding notch (c) of part (p) in order to drive the latter.

21. Selector device according to claim 20, characterized in that it comprises means for locking the part and the chain guide formed by a blade (128) carrying at one end a finger (130) for cooperating with slots (131) provided on part (p) and at its other end a lug (133) able to cooperate with an arm (27e) carrying the pawls, the blade being mounted so that it can rock and allows the finger to come out of a recess (131) when arm (27e) has been moved away from its inoperative position, whilst the cooperation of lug (133) with arm (27e), when the latter has reassumed its inoperative position, causes finger (130) to be introduced into the appropriate slot.

**Patentansprüche**

1. Wählvorrichtung zur Fernsteuerung der Stellung eines Organs (4, 6) relativ zu einem Träger (3, 101) durch ein Steuermittel (8), das an einem Ende eines biegsamen Zuggliedes (11), insbesondere eines Zugkabels, angreift, dessen anderes Ende mit dem Organ (4, 6) durch Verbindungsmittel verbunden ist, die ein mit Kerben (c) versehenes Bauteil (p) aufweisen, deren Anzahl mindestens gleich der Anzahl der dem Organ (4, 6) zu erteilenden Stellungen ist, wobei das Bauteil (p) mit einem von zwei Elementen verbunden ist, die durch das Organ (4, 6) oder den Träger (3, 101) gebildet sind, dadurch gekennzeichnet, dass sie aufweist:

— erste Verschiebemittel (E; 25e), die geeignet sind, mit dem Bauteil (p) in Abhängigkeit von einer Bewegung erster Art des Steuermittels (8) zusammenzuwirken, wobei die ersten Verschiebemittel (E; 25e) eine Relativverschiebung zwischen dem Träger (3, 101) und dem Organ (4, 6) von Kerbe zu Kerbe gestatten, und

— zweite Verschiebemittel (G; 69e), die geeignet sind, mit dem Bauteil (p) in Abhängigkeit von einer Bewegung zweiter Art des Steuerelements (8) zusammenzuwirken, wobei diese zweiten Mittel (G; 69e) eine Relativverschiebung zwischen dem Träger (3, 101) und dem Organ (4, 6) in einer zweiten Richtung gestatten, die zur ersten entgegengesetzt ist,

wobei eine derartige Ausbildung gewählt ist, dass die Bewegung erster Art des Steuermittels (8) einer Verschiebung dieses Mittels (8) aus einer mittleren Stellung (B) in eine erste Endstellung (A) (erste Phase) entspricht, an die sich eine Rückkehr in die mittlere Stellung (B) (zweite Phase) anschliesst, während die Bewegung zweiter Art einer Verschiebung dieses Steuermittels (8) aus der mittleren Stellung (B) in eine zweite Endstellung (C) (erste Phase) entspricht, an die sich eine Rückkehr in die mittlere Stellung (B) (zweite Phase) anschliesst.

2. Vorrichtung nach Anspruch 1, dadurch gekennzeichnet, dass die ersten und zweiten Verschiebemittel jeweils durch erste (E; 25e) und zweite (G; 69e) Sperrmittel gebildet sind.

3. Vorrichtung nach einem der beiden Ansprüche 1 oder 2, dadurch gekennzeichnet, dass sie Verriegelungsmittel (V; 127) zur Arretierung der Stellung des Bauteils (p) aufweist.

4. Vorrichtung nach einem der vorangehenden Ansprüche, dadurch gekennzeichnet, dass das Bauteil (p) mit dem Organ (4, 6) verschiebefest verbunden ist.

5. Vorrichtung nach der Gesamtheit der Ansprüche 2 und 3, bei der elastische Rückstellmittel vorgesehen sind, die eine Rückstellkraft zwischen dem Bauteil (p) und dem Träger (3) ausüben, dadurch gekennzeichnet, dass die zweiten Sperrmittel (G) so ausgebildet sind, dass sie die einen Riegel (17) aufweisenden Verriegelungsmittel (V) des Bauteils (p, pa, pb, pc) entriegeln und dieses Bauteil allein durch die elastische Rückstellkraft sich um eine Kerbe (c) verschieben lassen.

6. Vorrichtung nach Anspruch 5, dadurch gekennzeichnet, dass die ersten Sperrmittel (E) eine Sperrklinke (25) aufweisen, die mit dem Boden einer Kerbe (c) des Bauteils (p, pa, pb, pc) zur Anlage bringbar ist und dieses Bauteil während der ersten Phase der Bewegung erster Art so mitnehmen kann, dass ein Übergang des Riegels (17) in die folgende Kerbe bewirkt wird.

7. Vorrichtung nach Anspruch 6, dadurch gekennzeichnet, dass die Sperrklinke (25) durch das Ende eines Hebels (27, 27b, 27c) getragen wird, der auf einer vom Träger (3) getragenen Achse (30, h, 30c) schwenkbar gelagert ist, wobei das Ende des biegsamen Zuggliedes (11) an diesem Hebel befestigt ist und auf den Hebel eine das Zugglied unter Spannnung haltende elastische Rückstellkraft ausübt wird und wobei die Ausbildung so getroffen ist, dass die Bewegung erster Art einer Verschiebung des Steuermittels entspricht, bei der zunächst eine Zugkraft auf das Zugglied ausgeübt (erste Phase) und dann das Zugglied entspannt wird (zweite Phase), so dass das Steuermittel in seine mittlere Stellung (B) zurückkehrt.

8. Vorrichtung nach Anspruch 5, dadurch gekennzeichnet, dass die zweiten Sperrmittel (G) so angeordnet sind, dass in der ersten Phase der Bewegung zweiter Art der Riegel (17) von der an ihm anliegenden Flanke (19) der Kerbe so entfernt wird, dass sich das Bauteil (p, pa, pb, pc) unter der Wirkung der elastischen Rückstellkraft verschiebt, wobei die zweiten Sperrmittel Anschlagmittel (36, 37) zum Festhalten des Bauteils, nachdem dieses eine Verschiebung um im wesentlichen eine halbe Kerbe durchgeführt hat, aufweisen und in der zweiten Phase der Bewegung zweiter Art die Rückkehr des Riegels in die folgende Kerbe sicherstellen, wobei die Anschlagmittel (36, 37) das Bauteil freigeben.

9. Vorrichtung nach Anspruch 5, dadurch gekennzeichnet, dass die zweiten Sperrmittel (G) einen Hebel (34, 34b), insbesondere einen Winkelhebel, aufweisen, der auf einer vom Riegel (17) getragenen Schwenkachse (35) schwenkbar gelagert ist und einen, vorzugsweise abgerundeten, Kopf (36) mit einer Nase (37) aufweist, die mit einer der mit dem Riegel zusammenwirkenden Kerbe benachbarten Kerbe in Eingriff bringbar ist, dass zwischen diesem Hebel und den ersten Sperrmitteln solche Wirkverbindungsmittel (39, 39b) vorgesehen sind, dass die Bewegungen der ersten Sperrmittel (E) eine Drehung dieses Hebels (34, 34b) bewirken, wobei die Ausbildung so getroffen ist, dass in der ersten Phase der Bewegung zweiter Art die Drehung des Hebels (34, 34b) um die vom Riegel getragene Schwenkachse (35) und das Zusammenwirken des Kopfes (36) mit der Flanke einer Kerbe den Austritt des Riegels bewirken, und dass die Nase (37) des Kopfes die Anschlagmittel bildet, durch die das Bauteil am Ende der ersten Phase der Bewegung zweiter Art festhaltbar ist, wogegen der Hebel (34, 34b) in der zweiten Phase der Bewegung zweiter Art die Stellung einnimmt, welche die Rückkehr des Riegels in die folgende Kerbe gestattet.

10. Vorrichtung nach Anspruch 5, dadurch gekennzeichnet, dass der Riegel (17, 22c) durch eine Verschiebung in einer zur derjenigen Richtung, in der die Kerben aufeinanderfolgen, senkrechten Ebene aus einer Kerbe des Bauteils lösbar ist.

11. Vorrichtung nach Anspruch 2, dadurch gekennzeichnet, dass die ersten Sperrmittel (E) einen schwenkbar gelagerten Hebel (27d) aufweisen, der mit einer Klinke (25d) versehen ist, wobei das eine Ende des Kabels (11) an diesem Hebel befestigt ist, und dass die zweiten Sperrmittel (G) ebenfalls einen schwenkbar gelagerten Hebel (67) aufweisen, der mit einer Klinke (69) versehen ist, die gegensinnig zu der anderen Klinke (25d) arbeitet, wobei die beiden Hebel durch einen Lenker (39d) miteinander verbunden sind, der die Wirkverbindungsmittel bildet.

12. Vorrichtung nach Anspruch 1 zur Steuerung des Übergangs einer Antriebskette von einem Ritzel auf ein anderes Ritzel unterschiedlichen Durchmessers, dadurch gekennzeichnet, dass die ersten Verschiebemittel (E) die Verschiebung des mit Kerben versehenen Bauteils (p) in Richtung des Übergangs der Kette von einem kleineren Ritzel auf ein unmittelbar benachbartes grösseres Ritzel steuern und so ausgebildet sind, dass die Kette am Ende der ersten Phase der Bewegung erster Art eine Stellung ausserhalb der Normalstellung einnimmt, die vorzugsweise etwa einer halben Kerbe des Bauteils entspricht, wobei die Rückkehr der Kette in eine dem Ritzel entsprechende Stellung in der zweiten Phase der Bewegung erster Art bewirkt wird.

13. Vorrichtung nach einem der vorangehenden Ansprüche für die Gangschaltung eines Fahrrads, bei der das erwähnte Organ durch eine Führung (6, 6a) für die Kette (5) des Fahrrads gebildet oder mit dieser Führung verbunden und das Steuermittel durch den Schalthebel (8) der Gangschaltung gebildet ist, wobei in Höhe der Steuermittel (8) Mittel (70) zur Anzeige der Stellung des erwähnten Organs (4) vorgesehen sind, dadurch gekennzeichnet, dass die Anzeigemittel eine mit einer Gradeinteilung versehene drehbare Trommel (70) aufweisen, die auf der Achse (9) des Schalthebels (8) gelagert ist und auf der Seite des Hebels eine Bahn (71) mit zwei gegensinnigen Verzahnungen (72, 73) aufweist, wobei die kreisförmige Basis des Schalthebels (8) erste und zweite Antriebsmittel (74, 75, 76, 77, 78) trägt, durch die die Trommel (70) über den Hebel lediglich während der ersten Phase einer Bewegung erster Art oder zweiter Art antreibbar ist, wobei die Trommel (70) während der zweiten Phase dieser Bewegungen unbeweglich bleibt.

14. Vorrichtung nach einem der beiden Ansprüche 1 oder 2 für eine Fahrradgangschaltung, bei der eine Fernsteuerung der Stellung des eine Kettenführung (6) bildenden Organs relativ zum Träger (101) durch einen das Steuermittel (8) bildenden Hebel möglich ist, der an einem Ende des Zugkabels angreift, dessen anderes Ende durch Verbindungsmittel mit der Kettenführung verbunden ist, wobei die Kettenführungseinrichtung unter der Wirkung eines elastischen Rückstelldrehmoments um eine Drehachse schwenkbar ist, um die Kette während eines Ritzelwechsels unter Zugspannung zu halten, und wobei das Bauteil (p) verschiebefest mit der Kettenführung (6) verbunden ist, dadurch gekennzeichnet, dass die Kettenführung (6) auf einer Querstange (104) gleitend verschiebbar gelagert ist und dass die Verschiebemittel (E, G) für das Bauteil (p) so ausgebildet sind, dass sie sich von diesem Bauteil trennen und es nach Abschluss eines Ritzelwechsels vollständig freigeben.

15. Vorrichtung nach Anspruch 14, dadurch gekennzeichnet, dass die Querstange, auf der die Kettenführung (6) gleitend verschiebbar gelagert ist, durch die Drehachse (104) der Kettenführung gebildet ist.

16. Vorrichtung nach Anspruch 15 zur Verwendung bei einer Kettenschaltung, deren Kettenführung zwei drehbar gelagerte Rollen aufweist, um die die Kette herumläuft, dadurch gekennzeichnet, dass die Drehachse (104) der Kettenführung (6) koaxial zu oberen Rolle (102) der Kettenführung ist.

17. Vorrichtung nach Anspruch 16, dadurch gekennzeichnet, dass die Kettenführung (6) durch eine mit der drehbaren Rolle (102) drehfest verbundene Buchse (106) mit verminderter Gleitreibung verschiebbar gelagert ist, wobei die Anordnung aus Buchse und Rolle relativ zu der Querstange (104) drehbar und gleitend verschiebbar ist, die Kettenführung zusammen mit der Rolle bei deren Verschiebung verschoben wird und die elastischen Rückstellmittel (110, 111), die das Rückstelldrehmoment ausüben, das die Kettenspannung aufrechterhält, so ausgebildet sind, dass sie keine merkliche störende Querreaktion auf die gleitende Verschiebung ausüben.

18. Vorrichtung nach Anspruch 17, dadurch gekennzeichnet, dass die elastischen Rückstellmittel, deren Querreaktion Null oder weitgehend Null ist, durch zwei Federn (110, 111) mit gleichsinnigem Rückstelldrehmoment, jedoch transversaler oder radial entgegengesetzter Wirkung, gebildet sind.

19. Vorrichtung nach Anspruch 14, dadurch gekennzeichnet, dass die ersten und zweiten Verschiebungsmittel (E, G) einen gemeinsamen schwenkbar gelagerten Hebel (27e) mit zwei Klinken (25e, 69e) aufweisen, die gegensinnig wirken und durch Kraftübertragungsmittel verbunden sind, die vorzugsweise durch eine Feder (120) gebildet sind, wobei das Ende des Steuerkabels (11) an diesem Hebel befestigt ist.

20. Vorrichtung nach Anspruch 19, dadurch gekennzeichnet, dass sie für jede Klinke (25e, 69e) einen Nocken aufweist, der mit einer Rampe (121, 122) versehen ist, die mit einem an der Klinke befestigten und die Drehwinkelstellung dieser Klinke unter dem Einfluss einer elastischen Rückstellkraft bestimmenden Zapfen (123, 124) zusammenwirkt, wobei die Ausbildung so getroffen ist, dass während der Drehung des die Klinke tragenden Hebels in einer bestimmten Richtung die Rampe des Nockens die Führung der Klinke so lange sicherstellt, bis ihr Vorsprung (125, 126) in die entsprechende Kerbe (c) des Bauteils (p) eingreift, um letzteres anzutreiben.

21. Vorrichtung nach Anspruch 20, dadurch gekennzeichnet, dass sie Mittel zum Verriegeln des Bauteils und der Kettenführung aufweist, die durch eine Platte (128) gebildet sind, die an einem Ende einen Finger (130), der mit Nuten (131) des Bauteils (p) zusammenwirkt, und an ihrem anderen Ende einen Zapfen (133) aufweist, der mit einem die Klinken tragenden Hebel (27e) zusammenwirkt, wobei die Platte so gelagert ist, dass sie wippen kann und dem Finger den Austritt aus einer Nut (131) gestattet, wenn der Hebel (27e) seine Ruhelage verlassen hat, dagegen das Zusammenwirken des Zapfens (133) mit dem Hebel (27e), wenn letzterer seine Ruhelage wieder einnimmt, das Eingreifen des Fingers (130) in die entsprechende Nut bewirkt.

Fig.1.
B
8
2e type
C
1er type
12
9
A
10
11
11
D
5
L
S
c
P
II
6

7
S
11
3
22
r
23
32
L
24
38
30
31
E
27
26
34
5
V
35
28
40
17
25
29
36
37
1
G
19
P
16
33
c
15
14
4
20
6

Fig.2.

Fig.3
3
r
23
22
32
L
39
38
30
34
27
31
18
26
40
17
25
5
37
1
2
p
19
4
6
38
22
11
39
34
30
31
26
18
17
27
7
5
25
29
6
33
21
p
36
19
20
Fig.4.
11
r
23
38
32
L
34
30
27
35
31
40
5
17
36
28
25
37
29
1
19
p
6
4
f
39
20
Fig.5.

Fig.6.

VII
44
5
45
43
P
41
VII
Da
42
6

Fig.7.
47
41
3a
32
L
11
27
30
26
31
39
25
34
46
35
17
22a
42
R
pa
43
V
c
G
37
36
29a
6a
47
41
44
Fig.8.
42
45
32
3a
11
30
34
31
26
39
35
25
17
46
48
49
48
43
pa

53
54
L
E
27b
31b
25b
50
29b
39b
51
Pb
38b
34b
35
52
17
37
22b
rb
m
G
3
h
2
1
4
Fig.10.
7
11
54
56
55
25b
53
27b
L
39b
pb
51
34b
36
52
37
m
2
1
Fig.9.
D
6
4

Fig.11.
L
3
53
54
11
55
25b
56
31b
39b
50
h
27b
Pb
38b
37
34b
17
51
35
52
2
rb
22b
1

Fig.12.
3
53
11
54
55
L
56
29b
31b
50
25b
h
27b
Pb
39b
37
38b
51
34b
17
52
35
rb
2
22b
1

Fig.13.
11
22c
27c
30c
E
59
58
57
V
G
29c
17
60
61
pc
25
R
Fig.14.
27c
22c
62
57
17
pc
60
Fig.15.
11
31c
30c
58
27c
57
19c
25
61
pc
17
25
Fig.16.
27c
22c
62
57
17
60
Fig.17.
11
22c
30c
27c
57
G
19c
k
17
25
pc
Fig.18.
22c
62
27c
57
63
17
60
pc
Fig.19.
k
60
pc

Fig.20.
11
n
31d
39d
67
30d
26d
G
V
68
66
27d
69
E
cd
25d
pd
64
65
Fig.21.
11
30d
31d
39d
67
V
G
27d
26d
68
E
69
25d
64
66
cd
pd
65
Fig.22.
11
30d
n
39d
67
26d
G
V
66
68
27d
69
E
25d
cd
pd
64
65
Fig.23.
11
30d
39d
67
G
31d
26d
68
V
25d
66
E
69
25d
64
65
cd
pd

8
82
9
70
11
10

Fig. 25.

10
70
9
11
12
8

Fig. 24.

Fig.27.
74
75
Fig.26.
XXVII
74
75
XXVII
Fig.29.
8
72
73
9
71
79
76
70
Fig.30.
XXXI
XXXII
72
73
80
81
Fig.31.
72
Fig.32.
73
Fig.28.
78
77
76

Fig. 33.
XXXIV
11
P
117
110a
104
115a
115
101
111b
D
102
112
111a
6
103
5
Fig. 37.
110a
110
110b
Fig. 38.
111a
111
111b
Fig. 36.
110a
111a
110
110b
111b

Fig. 34.
5
D
105
6
110a
110
106
111b
112
102
107
108
104
111a
110b
109
118
122
126
123
125
101
69e
p
c
124
121
119
25e
G
120
E
116
11
L
S
31e
30e
27e
115
B
C
1er type
2e type
A
8
12
10
9
B
2e type
C
A
8
6
110
111
112
102
104
126
106
109
107
c
p
122a
122
125
121
101
124
69e
25e
27e
118
116
120
123
11
L
30e
31e
115
12
Fig. 35.

Fig. 39.
6
110
107
102
112
113
106
104
Fig.40.
6
110
102
114
104
Fig.42.
109
p
27e
133
129
135
128
116
130
136
134
69e
126
Fig.41.
30e
101
69e
124
27e
122
109
110
31e
6
p
135
136
133
127
129
116
121
128
130
112
111
XLIII
XLII
Fig.43.
c
p
131
130
132
101
109